# EUROPEAN PATENT APPLICATION

(11) **EP 4 807 630 A1**
(43) Date of publication of application: **16.09.2026**
(21) Application number: 25162794.9
(22) Date of filing: 11.03.2025
(51) Int. Cl.: G06N 5/022, G06N 5/02, G06N 20/00

(54) **METHODS AND SYSTEMS FOR GENERATING DOMAIN-KNOWLEDGE ENRICHED ENGINEERING DIAGRAMS CORRESPONDING TO ASSETS IN TECHNICAL INSTALLATION**

(71) Applicant: Siemens Aktiengesellschaft, 80333 München (DE)
(72) Inventor: GANESH, Gautam, 560030 Bangalore, Karnataka (IN); KAMATH, Yogesh, 560076 Bangalore, Karnataka (IN); KUMAR, Naveen, 560100 Bangalore, Karnataka (IN); N, Madhusudanan, 560036 Bengaluru, Karnataka (IN)
(74) Representative: HKW Intellectual Property PartG mbB

(57) **Abstract**

The present invention generally relates to the field of data processing systems, and more particularly relates to methods and systems for generating domain-knowledge enriched engineering diagrams corresponding to assets in a technical installation. The method includes receiving engineering diagrams corresponding to one or more assets (104) installed in one or more technical installations (120), from data sources, and determining schematic elements and topologies using visual recognition. Further, the method includes identifying correlations, associations, classifications, and patterns based on contextual features. A structured large language model (LLM) prompt is created to validate the relationships, generating an LLM response. The method further includes enhancing schematic features using semantic rules, ontologies, and hierarchical taxonomies, to generate enriched engineering diagrams for display on electronic devices (108).

## Description

The present invention generally relates to the field of data processing systems, and more particularly relates to methods and systems for generating domain-knowledge enriched engineering diagrams corresponding to assets in a technical installation.

Generally, digitalization of legacy systems comprising engineering drawing artifacts includes extraction of various elements, including textual content representing tags, graphical symbols corresponding to equipment and instruments, lines signifying pipes and signals, and the like. The extraction process, when performed using optical character recognition (OCR), artificial intelligence/machine learning (AI/ML), and image processing techniques, faces challenges with interpretation issues. These interpretation issues arise due to several factors, including the heterogeneous nature of organizations across disparate industries such as oil and gas, pharmaceuticals, and chemicals, each of which employs distinct, non-standardized methods for representing content. Additionally, the quality and fidelity of incoming data, which may originate from scanned documents, printouts, and other legacy formats, further contribute to the complexity and challenges in the extraction process.

Conventional methods comprise challenges in accurately identifying and classifying the extracted elements due to inconsistencies in diagram standards, varying document quality, and the diverse methods used across industries to represent similar entities. These limitations often result in ambiguities that hinder the automation process, necessitating manual intervention to verify and validate the extracted data. Such manual reviews contradict the primary objective of digitalization, which is to achieve greater efficiency and reduce reliance on human effort. Furthermore, the absence of standardized representation and annotation methods introduces inconsistencies that complicate data exchange and interoperability between various engineering platforms and stakeholders, leading to increased operational costs and potential data misinterpretations.

Conventional methods for addressing these challenges primarily rely on manual interpretation and annotation of extracted data, requiring close collaboration between data specialists and domain experts to ensure accuracy. Current method includes artificial intelligence (AI) and deep learning for the precision of object detection and text recognition within engineering diagrams, these technologies alone remain insufficient for achieving a fully automated digitalization process. Current solutions extract graphical elements, however, fail to incorporate the semantic understanding necessary for meaningful classification and contextualization of the extracted components. As a result, significant human effort is still required to enrich the extracted data with domain-specific insights and operational relevance.

Consequently, there is a need for improved, reliable methods and systems for generating domain-knowledge enriched engineering diagrams corresponding to assets in a technical installation, and to address at least the aforementioned issues of the prior arts.

Therefore, it is an object of the present invention to provide methods and systems for generating domain-knowledge enriched engineering diagrams corresponding to assets in a technical installation.

The object of the present invention is achieved by a method for generating domain-knowledge enriched engineering diagrams corresponding to assets in a technical installation. The method comprises receiving, from one or more data sources, one or more engineering diagrams corresponding to one or more assets installed in one or more technical installations. The one or more data sources and the one or more engineering diagrams comprise at least one of a structured data and an unstructured data. Further, the method comprises determining one or more schematic elements in the received one or more engineering diagrams comprising one or more topologies of the one or more assets corresponding to the one or more technical installations, using one or more visual recognition techniques. The one or more schematic elements comprises at least one of a schematic attribute, a schematic feature, and a schematic entity. Furthermore, the method comprises identifying at least one of one or more correlations, one or more associations, one or more classifications, and one or more patterns in the determined one or more schematic elements, based on one or more contextual features of the one or more schematic elements. Additionally, the method comprises generating a structured large language model (LLM) prompt corresponding to the identified at least one of one or more correlations, one or more associations, one or more classifications, and one or more patterns. Furthermore, the method comprises generating an LLM response to the generated structured LLM prompt. The LLM response comprises a validation result of at least one of the one or more correlations, the one or more associations, the one or more classifications, and the one or more patterns in the one or more schematic elements. The generated LLM response is based on a confidence score. The method further comprises enriching the one or more schematic elements in the one or more engineering diagrams using one or more LLM models, based on the validation result, by mapping engineering data from a domain-specific knowledge base corresponding to a technical domain associated with the one or more engineering diagrams. Additionally, the method comprises outputting, by the processor, via a display associated with an electronic device, the enriched one or more engineering diagrams corresponding to the one or more assets installed in the one or more technical installations.

In another exemplary embodiment, the method comprises resolving the at least one of one or more ambiguities and one or more anomalies for each of the one or more schematic elements, using the one or more LLM models, by mapping the engineering data from the domain-specific knowledge base corresponding to the technical domain associated with the one or more engineering diagrams, based on the validation result. Further, the method comprises augmenting at least one of the schematic attribute, the schematic feature, and the schematic entity derived from the LLM response to the one or more schematic elements, based on at least one of one or more semantic rules, one or more domain-specific ontologies, one or more hierarchical relationship taxonomies, and the validation result, upon resolving at least one of the one or more ambiguities and the one or more anomalies.

In an exemplary embodiment, for the method for identifying at least one of the one or more correlations, the one or more associations, the one or more classifications, the method comprises correlating the extracted one or more schematic elements with at least one of the schematic attribute, the schematic feature, and the schematic entity. Furthermore, the method comprises generating a first semantic relationship for the extracted one or more schematic elements. Additionally, the method comprises generating the structured LLM prompt corresponding to the generated first semantic relationship.

In an embodiment, for generating the one or more structured LLM prompts, the method comprises generating a disambiguation resolving prompt from the one or more structured LLM prompts for disambiguating a symbol classification in the determined one or more schematic elements. The one or more LLM models extract the engineering data from the domain-specific knowledge base, for resolving one or more ambiguities in the symbol classification based on analysing the one or more contextual features of the one or more schematic elements. Further, the method comprises generating an association-validating prompt from the one or more structured LLM prompts for validating the one or more associations between text and symbols in the determined one or more schematic elements. The one or more LLM models analyse one or more relational constraints, one or more contextual dependencies, and one or more engineering semantic diagrams for determining consistency and correctness in mapping the text and the symbols. Furthermore, the method comprises generating a domain-based refining prompt for a technical domain-based completion and correction of the one or more schematic elements. The one or more LLM models map pre-defined engineering heuristics, syntactic and semantic constraints, and rule-based inferences to refine and enrich the one or more engineering diagrams. Additionally, the method comprises generating a pattern decomposing prompt for decomposing the one or more patterns in the one or more schematic elements. The one or more LLM models extract structured representations, identify recurring relationships, and optimize engineering processes based on at least one of a historical data, a predefined constraints, a user-specified parameters. The one or more LLM prompts are dynamically optimized and prioritized based on at least one of one or more historical interactions with the one or more LLM models, one or more predefined rules, one or more technical domains, one or more modalities, the one or more ambiguities, and the one or more anomalies.

In an exemplary embodiment, for the validation result in the LLM response, the method further comprises cross-referencing the one or more schematic elements in the one or more engineering diagrams with one or more domain-specific rules stored in the knowledge base, using at least one of the pre-trained LLM models and the fine-tuned LLM models. Further, the method comprises applying one or more engineering principles and downstream use in engineering workflows for the cross-referenced one or more schematic elements, to validate a correctness of one or more inferred semantic relationships. Furthermore, the method comprises outputting the validated correctness of one or more inferred semantic relationships of the schematics entities.

In an exemplary embodiment, for generating the LLM response to the structured LLM prompt, the method further comprises identifying a set of semantic elements within an operating context of the one or more assets in the one or more engineering diagrams. Further, the method comprises analysing one or more feasible combinations of the identified set of semantic elements, based on a pre-defined constraints and operational parameters within the operating context of the one or more engineering diagrams. Furthermore, the method comprises decomposing the set of schematic elements into one or more functional units based on the operating context of the one or more assets. Additionally, the method comprises evaluating a feasibility of each of a combination of the decomposed set of schematic elements to validate a compatibility parameter and an optimization parameter within the operating context. Further, the method comprises outputting one or more combinations of the set of schematic elements with optimal feasibility within the operating context.

In an exemplary embodiment, the method further comprises determining a confidence score for each of at least one of one or more correlations, one or more associations, one or more classifications, and one or more patterns in the determined one or more schematic elements, based on the generated structured LLM prompt. Further, the method comprises resolving at least one of one or more ambiguities and one or more anomalies for each of the one or more schematic elements, using at least one of the pre-trained LLM models and the fine-tuned LLM models, based on the validation result and the determined confidence score.

In an exemplary embodiment, the method comprises iteratively updating the one or more schematic elements in the one or more engineering diagrams, based on resolving at least one of one or more ambiguities and one or more anomalies, and an engineering data from a knowledge base.

In an exemplary embodiment, the method comprises identifying the one or more schematic elements comprising one or more engineering annotations in the one or more engineering diagrams. Further, the method comprises determining a contextual relevance of the identified one or more engineering annotations by associating the one or more engineering annotations with one or more components in spatial proximity to the one or more engineering annotations, and a pre-defined engineering rules. Further, the method comprises segmenting the one or more engineering annotations into a plurality of segmented annotations, using at least one of the pre-trained LLM models and the fine-tuned LLM models. Furthermore, the method comprises predicting the one or more schematic elements comprising one or more first tags, to resolve ambiguities in the plurality of segmented annotations, by analysing a pre-defined engineering standards and referencing contextual schematic elements within the one or more engineering diagrams. Additionally, the method comprises assigning one or more second tags to the one or more engineering annotations in the one or more engineering diagrams, based on the prediction.

In an exemplary embodiment, the one or more engineering diagrams comprise at least one of drawings, schematics, figures, Piping and Instrumentation Diagrams (P&IDs), floor plans, interconnections, electrical connections, blueprints, engineering annotations, and hatchback heating, ventilation, and air conditioning (HVAC) diagrams.

In an exemplary embodiment, the one or more contextual features comprises at least one of a temporal information, a spatial information, a semantic information relevant to usage of each of the one or more schematic elements.

In an exemplary embodiment, decomposing the set of schematic elements into one or more functional units comprising, segregating at least one of one or more text patterns, labels, symbols, annotations, functional components, connections, and graphical elements, based on functionalities and interconnections of each of the functional components, instruments, pipelines, nozzles in the one or more assets.

Another object of the present invention is achieved by a computing system comprising one or more processor(s), and a memory coupled to the one or more processor (s). The memory comprises an enriched engineering diagram generating module stored in a form of machine-readable instructions executable by the one or more processor(s). The enriched engineering diagram generating module is capable of performing method steps described above.

Yet another object of the present invention is achieved by a computing environment comprising one or more user devices, one or more technical installations comprising one or more assets, and a computing system communicatively coupled to the one or more technical installations and the one or more user devices via a network. The computing system comprises an enriched engineering diagram generating module capable of performing method steps described above.

Yet another object of the present invention is achieved by a computer program product comprising machine-readable instructions stored therein that, when executed by one or more processor(s), cause the one or more processor(s) to perform method steps described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG. 1: is a block representation of a network architecture for a system capable of generating domain-knowledge enriched engineering diagrams corresponding to assets in a technical installation, according to an embodiment of the present invention;
- FIG. 2: is a block diagram of a computing system such as those shown in FIG. 1, depicting various components to implement embodiments of the present invention;
- FIG. 3: is a block diagram of an enriched engineering diagram generating module, such as those shown in FIGs. 1 and 2, capable of generating domain-knowledge enriched engineering diagrams corresponding to assets in a technical installation, according to the embodiment of the present invention;
- FIG. 4: is a flow diagram depicting an exemplary method of digitization of an engineering diagram, according to an embodiment of the present invention;
- FIG. 5: is a schematic diagram depicting an exemplary engineering diagram comprising an ambiguity in a symbol associated with a nozzle attached to a tank, according to the embodiment of the present invention;
- FIG. 6: is a schematic diagram depicting an exemplary engineering diagram comprising an ambiguity in a tag associated with a pipeline, according to the embodiment of the present invention; and
- FIG. 7: is a process flowchart illustrating an exemplary method of generating domain-knowledge enriched engineering diagrams corresponding to assets in a technical installation, according to the embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

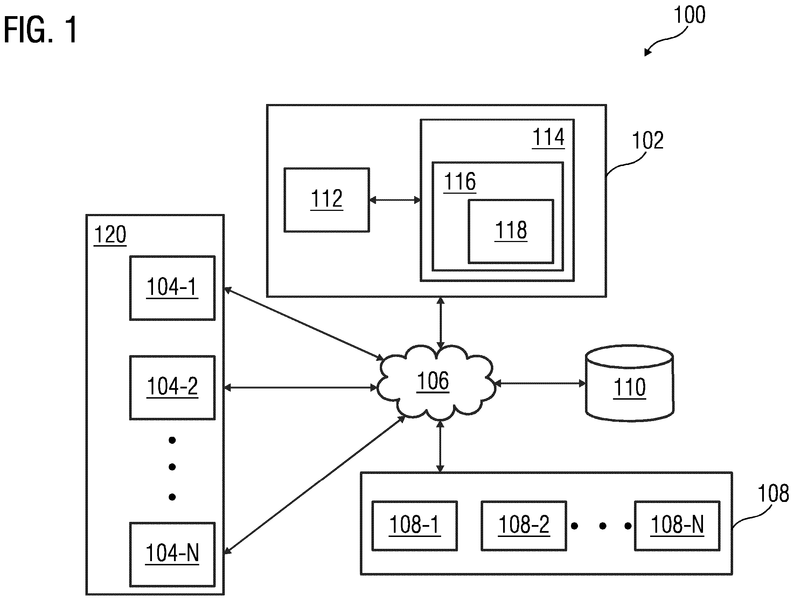

FIG. 1 is a block representation of a network architecture 100 for a system 102 capable of generating domain-knowledge enriched engineering diagrams corresponding to assets in a technical installation, according to an embodiment of the present invention. Particularly, FIG. 1 depicts a computing system 102 which is capable of delivering remote applications in a computing environment (not shown) for managing a technical installation 120 comprising one or more assets 104-1, 104-2, ......, 104-N (individually referred to as the asset 104, and collectively referred to as the assets 104). As used herein, "computing environment" refers to a processing environment comprising configurable computing physical and logical resources, for example, networks, servers, storage, applications, services, and the like, and data distributed over the computing platform. The computing environment provides on-demand network access to a shared pool of the configurable computing physical and logical resources.

The computing system 102 is connected to the technical installation 120 via a communication network 106 (e.g., industrial ethernet or Internet, and the like). The technical installation 120 comprises the assets 104, and the assets 104 may comprise, but not limited to, objects, subjects, servers, robots, industrial equipment(s), machineries, pipelines, wirings, tanks, humans, sensors, lighting systems, and so on. The computing system 102 may be a public cloud, a private cloud, and/or a hybrid cloud or even an edge system configured to provide dedicated remote services to its users. The technical installation 120 may comprise one or more data acquisition devices (not shown). The data acquisition devices may include, but not limited to, a Light Detection and Ranging (LIDAR) sensor, a Radio Detection and Ranging (RADAR) sensor, a Red Green Blue (RGB) depth sensor, stereo camera, a camera, and so on.

Further, the computing system 102 may also be connected to one or more electronic devices 108-1, 108-2, ..., 108-N (individually referred to as the electronic device 108, and collectively referred to as the electronic devices 108) via the communication network 106. The electronic devices 108 may access the computing system 102 for generating domain-knowledge enriched engineering diagrams corresponding to assets in a technical installation. Further, the electronic device 108 may be associated with a user, an individual, an administrator, a vendor, a technician, a worker, a specialist, a healthcare worker, an instructor, a supervisor, a team, an entity, an organization, a company, a facility, a bot, any other user, and combination thereof. In another example, the assets 104 may include, but not limited to, a user, an object a subject, a device, an equipment, a hardware, an infrastructure, an organization, a facility, a hospital, a healthcare facility, an exercise facility, a laboratory facility, an e-commerce warehouse, a merchant organization, an airline company, a hotel booking company, a company, an outlet, a manufacturing unit, an enterprise, an organization, an educational institution, a secured facility, a warehouse facility, a supply chain facility, a vehicle manufacturing/managing organization, a fleet operating company, any other facility, a combination thereof, and the like. The electronic device 108 may be used to provide input and/or receive output to/from the computing system 102, and/or to a database 110, respectively. The electronic device 108 may present to the user (not shown), one or more user interfaces for the user to interact with the computing system 102 and/or to the database 110 for generating domain-knowledge enriched engineering diagrams corresponding to assets in a technical installation. The electronic devices 108 may include an electrical device, an electronic device, an electromechanical device, and a computing device, and the like. The computing device may include, but not limited to, a mobile, a laptop computer, a desktop computer, a tablet computer, a smartphone, a wearable device, a phablet computer, an augmented reality/virtual reality (AR) device, a metaverse-based device, a personal digital assistant (PDA), an edge computing device, a combination thereof, and the like. The electronic devices 108 may access remote applications (such as enabling users to generate domain-knowledge enriched engineering diagrams corresponding to assets in a technical installation) via a mobile application, a web browser, a computer application, a portal, a platform, a framework, and the like.

The computing system 102 comprises a processor 112, and a memory 114. The memory 114 comprises a plurality of modules 116, and the plurality of modules may include a computing/computer-simulated environment 118. The computing system 102 further comprises a computing platform (not shown), a server (not shown) including hardware resources and an operating system (OS), a network interface, application program interfaces (APIs) (not shown). Further, the computing environment may include the database 110. The database 110 may comprise topology data, diagram data, schematic entities data, engineering diagram data, objects data, entities data, model data, a combination thereof, and so on. The database 110 may be of type of a cloud database, a repository, a monetary database, relational database, and so on. The network interface enables communication between the computing system 102, the technical installation 120, and the electronic device(s) 108. The interface (not shown in FIG. 1) may allow one or more users (not shown) at the electronic device(s) 108 to access engineering diagram data stored at the computing system 102 and perform one or more actions on the engineering diagram data as same instance. The server may include one or more servers on which the OS is installed. The servers may comprise one or more processors, one or more storage devices, such as memory units, for storing data and machine-readable instructions for example, applications and application programming interfaces (APIs), and other peripherals required for providing computing functionality. The computing platform is a platform which enables functionalities such as data reception, data processing, data rendering, data communication, and the like, using the hardware resources and the OS of the servers and delivers the aforementioned remote services using the application programming interfaces deployed therein. The computing platform may comprise a combination of dedicated hardware and software built on top of the hardware and the OS.

The technical installation 120 comprises one or more sensing units and/or capturing units and/or data acquisition devices. The one or more sensing units may be sensors embedded at multiple positions on/in proximity to the assets 104. The one or more sensing units may be configured for capturing real-time 3D multimedia raw input data and entity data associated with the one or more assets 104. The real-time 3D multimedia raw input data comprises audio data, video data, image data, environmental data, entity data, and so on. Each of the audio data, video data, image data comprises data frames captured by corresponding the data acquisition devices. The object data comprises scene information, audio information of an equipment, audio information of an obstacle, a human, and the like. As used herein the communication network 106, refers to, for example, any wired or wireless network such as the internet, an intranet, that implements Bluetooth^{®} of Bluetooth Sig, Inc., a network that implements Wi-Fi^{®} of Wi-Fi Alliance Corporation, an ultra-wideband communication network (UWB), a wireless universal serial bus (USB) communication network, a communication network that implements ZigBee^{®} of ZigBee Alliance Corporation, a general packet radio service (GPRS) network, a mobile telecommunication network such as a global system for mobile (GSM) communications network, a code division multiple access (CDMA) network, a third generation (3G) mobile communication network, a fourth generation (4G) mobile communication network, a fifth generation (5G) mobile communication network, a sixth generation (6G) mobile communication network, a new radio (NR) communication network, a narrow band internet of things network (NB-IoT), an open radio access network (o-RAN), a long-term evolution (LTE) mobile communication network, a public telephone network, and the like., a local area network, a wide area network, an internet connection network, an infrared communication network, and the like, or a network formed from any combination of these networks.

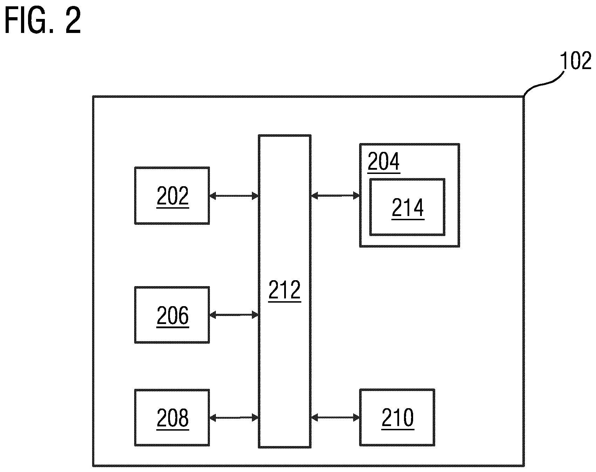

The computing platform comprises an enriched engineering diagram generating module (not shown). A detailed view of various components of the computing system 102 is shown in FIG 2. The computing system 102 may be a standalone system, an edge system, or a system on a cloud. In a preferred embodiment, the computing system 102 is a cloud-based system capable of generating domain-knowledge enriched engineering diagrams corresponding to assets in a technical installation 120.

The term "domain-knowledge enriched engineering diagrams" refers to engineering diagrams that are augmented with specialized information, attributes, and contextual details derived from a domain-specific knowledge base associated with a particular technical field or industry. The engineering diagrams go beyond basic schematic representations by incorporating additional metadata, technical parameters, and operational insights that are relevant to the corresponding assets in a technical installation 120. The term "domain-knowledge" may refer to expert-driven information specific to a particular engineering discipline/domain, such as mechanical, electrical, electronics, computer, chemical, civil engineering, and the like. This knowledge may include technical specifications, industry standards, component relationships, operating conditions, failure modes, and compliance requirements. The process of enriching involves integrating these specialized insights into the engineering diagrams, ensuring they convey a more comprehensive and accurate representation of the physical and functional characteristics of the associated assets.

For instance, in electrical engineering diagrams, domain-knowledge enrichment may involve embedding information such as voltage ratings, wire gauge details, circuit protection parameters, and adherence to electrical codes. In mechanical engineering diagrams, the enrichment may include details on material properties, load tolerances, thermal limits, and manufacturing standards. In a technical installation, such enriched diagrams provide a detailed, context-aware visualization of assets, facilitating more precise analysis, diagnostics, and decision-making.

The enrichment process typically involves using advanced computational models, including Large Language Models (LLMs), to extract, map, and integrate relevant data from structured or unstructured sources within a domain-specific knowledge base. This may involve dynamically updating the diagrams to reflect real-time data, resolving ambiguities, or addressing anomalies by cross-referencing historical information and predefined rules. By generating domain-knowledge enriched engineering diagrams, the system enhances the utility of conventional diagrams by providing richer contextual information. This allows engineers and technical personnel to better understand design assets, operation, and maintenance requirements while improving the accuracy, clarity, and relevance of the engineering documentation in complex technical installations.

The database 110 stores the information relating to the technical installation 120 and the electronic device(s) 108. The database 110 is, for example, a structured query language (SQL) data store or a not only SQL (NoSQL) data store. The database 110 is configured as cloud-based database implemented in the network architecture 100, where computing resources are delivered as a service over the computing platform. The database 110, according to another embodiment of the present invention, is a location on a file system directly accessible by the computing platform. The database 110 is configured to store engineering diagrams and other artifacts pertaining to the output of a plurality of modules 116 or the computer-simulated environment 118.

To access the remote applications, engineering diagrams are required to be deployed on a computing platform, which is then accessed by a personnel on the electronic device(s) 108 to avail the remote applications.

The computing system 102 may comprise a plurality of servers or processors (also known as 'cloud infrastructure'), which are geographical distributed, and connected with each other via the communication network 106. A dedicated platform (hereinafter referred to as 'computing platform') may be installed on the servers/processors for providing the above functionality as an application (hereinafter referred to as 'remote application'). The computing platform may comprise a plurality of software programs executed on one or more servers or processors of the computing system 102 to enable the delivery of the requested applications to the devices and their users.

Further, the computing system 102 may be implemented by way of a single device or a combination of multiple devices that may be operatively connected or networked together. The computing system 102 may be implemented in hardware or a suitable combination of hardware and software. The computing system 102 comprises one or more hardware processor(s) 112, and the memory 114. The memory 114 may include the plurality of modules 116. The system 102 may be a hardware device including the hardware processor 112 executing machine-readable program instructions for generating domain-knowledge enriched engineering diagrams corresponding to assets in a technical installation in the computing/computer-simulated environment 118. Execution of the machine-readable program instructions by the hardware processor 112 may enable the computing system 102 to generate domain-knowledge enriched engineering diagrams corresponding to assets in a technical installation. The "hardware" may comprise a combination of discrete components, an integrated circuit, an application-specific integrated circuit, a field-programmable gate array, a digital signal processor, or other suitable hardware. The "software" may comprise one or more objects, agents, threads, lines of code, subroutines, separate software applications, two or more lines of code, or other suitable software structures operating in one or more software applications or on one or more processors.

The one or more hardware processors 112 may include, for example, microprocessors, microcomputers, microcontrollers, digital signal processors, central processing units, state machines, logic circuits, and/or any devices that manipulate data or signals based on operational instructions. Among other capabilities, hardware processor 112 may fetch and execute computer-readable instructions in the memory 114 operationally coupled with the computing system 102 for performing tasks such as data processing, input/output processing, and/or any other functions. Any reference to a task in the present disclosure may refer to an operation being or that may be performed on data.

Though few components and subsystems are disclosed in FIG. 1, there may be additional components and subsystems which is not shown, such as, but not limited to, ports, routers, repeaters, firewall devices, network devices, databases, network attached storage devices, servers, assets, machinery, instruments, facility equipment, emergency management devices, image capturing devices, sensors, vehicle communication infrastructure devices, any other devices, and combination thereof. The person skilled in the art should not be limiting the components/subsystems shown in FIG. 1. Although FIG. 1 illustrates the computing system 102, and the electronic devices 108 connected to the database 110, one skilled in the art can envision that the computing system 102, and the electronic devices 110 can be connected to databases, servers, via the communication network 106.

Those of ordinary skilled in the art will appreciate that the hardware depicted in FIG. 1 may vary for particular implementations. For example, other peripheral devices such as an optical disk drive and the like, local area network (LAN), wide area network (WAN), wireless (e.g., wireless-fidelity (Wi-Fi)) adapter, graphics adapter, disk controller, input/output (I/O) adapter, Internet of Things (IoT) devices, digital twin devices, Artificial Intelligence (AI)/ Machine Learning (ML) devices may also be used in addition or in place of the hardware depicted. The depicted example is provided for explanation only and is not meant to imply architectural limitations concerning the present disclosure.

Those skilled in the art will recognize that, for simplicity and clarity, the full structure and operation of all data processing systems suitable for use with the present disclosure are not being depicted or described herein. Instead, only so much of the system 102 as is unique to the present disclosure or necessary for an understanding of the present disclosure is depicted and described. The remainder of the construction and operation of the computing system 102 may conform to any of the various current implementations and practices that were known in the art.

In an exemplary embodiment, the computing system 102 may receive, from one or more data sources (not shown), one or more engineering diagrams corresponding to the one or more assets 104 installed in one or more technical installations 120. The one or more data sources and the one or more engineering diagrams comprise, but are not limited to, a structured data, an unstructured data, and the like. The one or more engineering diagrams comprise but are not limited to, drawings, schematics, piping, and instrumentation diagrams (P&IDs), floor plans, interconnections, electrical connections, hatchback diagrams, and the like. For example, the engineering diagrams may originate from one or more data sources associated with various technical installations or assets. The data sources may include structured and unstructured data, comprising an array of inputs essential for creating or refining engineering diagrams. A primary type of structured data source comprises computer-aided designs/diagrams, which are instrumental in generating precise Two-Dimensional (2D) and Three-Dimensional (3D) representations of mechanical parts, assemblies, architectural layouts, and the like.

Additionally, simulation outputs serve as a vital data source, which provide structured data, including stress-strain analysis, thermal performance, and fluid dynamics, which may be integrated with computer-aided design models to enhance engineering diagrams. Similarly, electrical schematic databases include structured data used to design electrical circuits, printed circuit boards (PCBs), and wiring diagrams.

Further, unstructured data sources include scanned blueprints, legacy diagrams in portable document format (PDF) or raster formats, and image data from older systems, which are often digitized and vectorized for use in modern workflows. In certain cases, some files combine structured and unstructured elements to model terrain, map utilities, or visualize infrastructure layouts in civil and environmental engineering.

Furthermore, process flow databases include structured data for creating diagrams related to chemical processes, control systems, and workflows. Internet of Things (IoT) and sensor data, which can be structured or semi-structured, provide real-time insights for operational dashboards and process flow diagrams, particularly in industrial automation.

Structured data from product lifecycle management (PLM) systems is essential for managing version-controlled diagrams, bills of materials (BOMs), and workflow representations. On the other hand, unstructured inspection data, such as 3D scanning outputs may be utilized to compare as-built components with design specifications, forming the basis for inspection and quality assurance diagrams.

In an exemplary embodiment, the computing system 102 may determine one or more schematic elements in the received one or more engineering diagrams comprising one or more topologies of the one or more assets 104 corresponding to the one or more technical installations 120, using one or more visual recognition techniques. The one or more schematic elements comprises, but not limited to, a schematic attribute, a schematic feature, a schematic entity, and the like. The visual recognition techniques may analyse, interpret, and classify visual data, including images, videos, and real-world scenes, for applications across various industries. Object detection techniques may identify and localize objects within a visual field, which may be essential for applications such as, but not limited to, autonomous vehicles, industrial quality control, and the like. Image classification models may assign labels to entire images, while semantic segmentation methods may classify every pixel in an image for precise scene analysis, critical in autonomous driving and environmental monitoring. Optical character recognition (OCR) systems and deep learning models may extract textual information from scanned documents, license plates, and forms, enabling digitization and automated data processing. The deep learning models may include, but not limited to, Convolutional Neural Networks (CNNs), Recurrent Neural Networks (RNNs), Long Short-Term Memory (LSTM), and the like. Gesture recognition deciphers human movements for touchless interfaces, gaming, and sign language interpretation. Feature extraction techniques may identify key points in images, aiding in image matching, stitching, and 3D reconstruction. Deep learning-powered anomaly detection methods such as, but not limited to, variational autoencoders (VAEs) and generative adversarial networks (GANs), identify irregularities in visual data, used in for example, medical imaging and manufacturing quality assurance.

For example, the schematic elements may refer to fundamental components and/or building blocks used in a creation of diagrams, blueprints, and/or other visual representations of systems, components, processes, structures, and the like. The schematic elements provide a symbolic or graphical depiction of objects, attributes, relationships, actions, and the like, that define the system being represented. The term 'schematic elements' comprises a plurality of subcategories, including attributes, features, entities, and the like. The schematic attribute may be a property or characteristic associated with a specific element within the schematic. The schematic attribute may provide descriptive metadata, parameters, and the like, that define the properties of an element. For example, colour of a line in an electrical circuit diagram indicating voltage level, thickness of a pipe in a fluid flow diagram representing flow capacity, label assigned to a resistor (e.g., "R1") to indicate identity and value of the resistor, and the like.

Similarly, the schematic feature refers to a distinctive graphical or symbolic element that represents a functional or structural aspect of the system. In one example, the schematic feature and the schematic attribute may be same or different in some scenarios and examples of the engineering drawings. The schematic features may highlight specific details or functionalities of the schematic. For example, a dotted line in a mechanical drawing representing a hidden component, a cross-hatched region in a building plan indicating restricted zones or firewalls, a specialized symbol in a flowchart, such as a diamond for decision points or parallelogram for input/output operations, and the like. Further, the schematic entity may be a discrete, identifiable component within the schematic that serves as a functional unit of the overall system. The schematic entities may represent physical or logical components. For example, an AND gate in a logic circuit diagram, symbolizing a logical operation, a pump icon in a process flow diagram representing a mechanical device, a database symbol in a software architecture diagram indicating data storage and the like. Additionally, the schematic elements may include other related or analogous components that might not be included within the aforementioned subcategories, however, still contribute to purpose of the schematic. For example, annotations or comments added to a schematic to provide additional context, connection paths or links that define relationships between entities in a network topology diagram, dynamic markers such as arrows indicating the flow of material or information, and the like.

In an exemplary embodiment, the computing system 102 may identify at least one of one or more correlations, one or more associations, one or more classifications, and one or more patterns in the determined one or more schematic elements, based on one or more contextual features of the one or more schematic elements. The schematic elements may represent parts of a design, diagram, or dataset. The computing system 102 may analyse the schematic elements in context, using surrounding information or predefined rules, to determine deeper insights. The computing system 102 identifies correlations, which are relationships or dependencies between schematic elements. Further, the computing system 102 identifies associations such as links or connections between elements based on context. Furthermore, the computing system 102 identifies classifications comprising categorization of elements into predefined classes or types, patterns comprising recurrent structures or trends within the schematic elements. For example, to identify correlations, consider a circuit diagram where the computing system 102 processes the relationship between components such as resistors, capacitors, and transistors. Based on their placement and connections, the computing system 102 identifies correlations, such as a capacitor is consistently connected in parallel with a resistor across specific nodes to form a filter circuit. Further, to identify associations, consider a building blueprint where schematic elements such as walls, doors, and windows are present. The computing system 102 may analyse the blueprint and determine a door is always associated with an adjacent wall, and its placement correlates with nearby rooms labelled as 'Entry' or 'Exit'.

Further, the computing system 102 may perform classifications in a dataflow diagram for a software system, various schematic elements such as process nodes, data stores, and data flows. The computing system 102 may classify certain nodes as 'input processes', 'computation processes', or 'output processes' based on their position and connections in the diagram. For example, in a 3D point cloud model of a manufacturing facility, schematic elements represent machines, pathways, and structural elements. The computing system 102 may detect recurring patterns such as machines are typically aligned in rows with a 2-meter gap between them for maintenance access. The term 'contextual features' means the system 102 relies on additional information or characteristics of the schematic elements. For example, spatial context includes a relative position of elements (e.g., one component is above another, functional context includes a purpose or role of each element (e.g., components used for power regulation versus signal processing), a temporal context includes a sequence or timing in dynamic scenarios (e.g., the order in which data flows through nodes in a workflow).

In an exemplary scenario, the computing system 102 may analyse an industrial pneumatic system schematic used in a manufacturing plant to control actuators, valves, and air compressors. By processing schematic elements such as air supply lines, pressure regulators, control valves, and actuators based on contextual features such as connections, spatial arrangement, and operational dependencies, the system 102 identifies various insights. The one or more contextual features comprises, but not limited to, a temporal information, a spatial information, a semantic information relevant to usage of each of the one or more schematic elements. The system 102 detects correlations, such as the consistent use of larger-diameter air supply lines in sections where pressure settings exceed a specific threshold, and the preference for double-acting cylinders in actuators requiring high force output. The system 102 also identifies associations, such as the frequent linkage between pilot-operated directional control valves and high-speed pneumatic actuators, as well as the placement of pressure sensors in segments where pressure drop is expected. Additionally, the system 102 classifies schematic elements into categories, including power supply elements like air compressors and reservoirs, control elements like pressure regulators and valves, actuation elements like pneumatic cylinders, and monitoring elements like pressure sensors and flow meters. Through pattern detection, it recognizes modular design trends where each workstation includes a local pressure regulator, a 5/2-way valve, and a pneumatic actuator, ensuring standardization across the production line. The system 102 also identifies efficiency patterns, such as excessive bends and long pipelines contributing to unnecessary pressure losses. The computing system 102 relies on contextual features, including connectivity context, functional context, and spatial context, to ensure best practices are followed in system design. By automating schematic analysis, the system 102 enables users to optimize the pneumatic network, enhance efficiency, and pre-emptively address potential failures such as bottlenecks in airflow or misconfigured control elements, ultimately improving overall system performance in an industrial environment. In another example, in a medical imaging system, the computing system 102 analyses schematic elements representing different tissues in a magnetic resonance imaging (MRI) scan. By using contextual features such as intensity, texture, and proximity, the system 102 may correlates tumour-like regions with surrounding blood vessels, associates certain regions with known anatomical structures (e.g., the heart, lungs), classifies regions into 'healthy tissue', 'tumorous tissue', 'scar tissue', and the like, detects patterns of tissue growth indicative of specific diseases.

In an exemplary embodiment, the computing system 102 may generate a structured large language model (LLM) prompt corresponding to the identified at least one of the one or more correlations, the one or more associations, the one or more classifications, and the one or more patterns. The LLM models may comprise, but not limited to, Generative Pre-trained Transformer (GPT) series of models, and the like.

The structured prompt ensures that the LLM receives precise contextual information, enabling the LLM model to generate accurate, relevant, and actionable responses. To detect correlations, associations, classifications, and patterns in a dataset or schematic, prompts should be structured to focus on specific analytical tasks. For detecting correlations, a prompt might instruct the system 102 to analyse relationships, such as determining whether higher input flow rates correlate with increased production output or whether the placement of components influences system efficiency. For associations, prompts may focus on identifying functional or contextual dependencies, such as the link between sensor placements and system fault detection capabilities or the connection between material properties and durability. When detecting classifications, the prompts can guide the system 102 to group elements into categories, such as classifying components in a schematic into power supply, control, actuation, and monitoring elements, or categorizing operational failures into mechanical, electrical, or software-related issues, and the like. For pattern detection, prompts can ask the system 102 to identify recurring trends, such as patterns in downtime occurrences aligning with operational schedules or repeated design features in industrial blueprints that improve efficiency. A generalized prompt can combine all these tasks by asking the system 102 to analyse the given data or schematic to detect correlations, associations, classifications, and patterns, providing detailed explanations and actionable insights for each.

In another example, in an industrial setting, suppose the computing system 102 is analysing a pneumatic system schematic, the system 102 detects a correlation between high-pressure zones and frequent actuator failures. Based on this, the system 102 generates a structured LLM prompt such as, for example, but not limited to, 'given a pneumatic system where actuators in high-pressure regions experience increased failure rates, suggest design modifications or alternative components to enhance system reliability'. Similarly, if the system 102 identifies an association between specific sensor placements and improved energy efficiency, the system 102 may generate a structured prompt such as 'in an industrial air compressor system, sensors placed at critical junctions help optimize energy consumption. what are best practices for sensor placement to minimize power losses. For classification, if the system 102 categorizes control valves into high-speed and low-speed operation types, the structured prompt may include 'different control valves in a manufacturing plant are categorized based on response time. Provide a comparative analysis of high-speed and low-speed valves in terms of energy efficiency and operational lifespan'. When detecting patterns, such as recurring inefficiencies in pipeline layouts, the computing system 102 may generate a structured LLM prompt such as 'analysis of industrial pneumatic schematics reveals recurring pressure losses due to excessive bends in pipelines. What are the best pipeline design principles to minimize pressure drops in high-flow industrial environments?'.

In an exemplary embodiment, for generating the one or more structured LLM prompts, the computing system 102 may generate a disambiguation resolving prompt from the one or more structured LLM prompts for disambiguating a symbol classification in the determined one or more schematic elements. The one or more LLM models extract the engineering data from the domain-specific knowledge base, for resolving one or more ambiguities in the symbol classification based on analysing the one or more contextual features of the one or more schematic elements. In an exemplary embodiment, the computing system 102 may generate an association validating prompt from the one or more structured LLM prompts for validating the one or more associations between text and symbols in the determined one or more schematic elements. The one or more LLM models analyse one or more relational constraints, one or more contextual dependencies, and one or more engineering semantic diagrams for determining consistency and correctness in mapping the text and the symbols. Further, the computing system 102 may generate a domain-based refining prompt for a technical domain-based completion and correction of the one or more schematic elements. The one or more LLM models map pre-defined engineering heuristics, syntactic and semantic constraints, and rule-based inferences to refine and enrich the one or more engineering diagrams. Additionally, the computing system 102 may generate a pattern decomposing prompt for decomposing the one or more patterns in the one or more schematic elements. The one or more LLM models extract structured representations, identify recurring relationships, and optimize engineering processes based on at least one of a historical data, a predefined constraint, a user-specified parameter, and the like. The one or more LLM prompts are dynamically optimized and prioritized based on at least one of one or more historical interactions with the one or more LLM models, one or more predefined rules, one or more technical domains, one or more modalities, the one or more ambiguities, the one or more anomalies, and the like.

The term "dynamically optimized and prioritized" refers to a real-time or adaptive adjustment and ranking of the one or more Large Language Model (LLM) prompts to improve effectiveness, relevance, and efficiency of the LLM prompts when interacting with the LLM models. This process is performed based on various factors, including historical interactions, predefined rules, technical domains, data modalities, ambiguities, anomalies, and the like. The optimization aspect involves tailoring the prompt structure, content, or format to maximize the accuracy and contextual alignment of output of the LLMs. The prioritization aspect involves ordering or selecting the most relevant prompts to address specific requirements or uncertainties.

Dynamic optimization entails continuously refining the prompt formulation by analysing contextual signals and prior system performance. For instance, if historical interactions indicate that certain prompt structures yield more accurate responses for a particular technical domain, future prompts may be adjusted accordingly. This may involve modifying the phrasing of questions, including additional context, or restructuring prompts to resolve identified ambiguities or anomalies. For example, in an engineering context, if previous queries regarding electrical schematics produced more reliable results when specifying voltage ranges, future prompts may automatically include such parameters. Dynamic prioritization involves ranking prompts based on contextual relevance and the likelihood of addressing ambiguities or anomalies. This ranking can be based on various criteria, such as the frequency of specific ambiguities in historical data, predefined importance levels from expert-defined rules, or the criticality of addressing anomalies within a technical domain. For instance, if an ambiguity is detected in the schematic related to component labelling, prompts explicitly seeking clarification on labelling standards or nomenclature may be prioritized over more general queries.

Examples of dynamically optimized and prioritized prompts include historical interaction-based optimization, where if prior interactions show that ambiguities in mechanical diagrams are best resolved by specifying material properties, the system 102 may automatically append material-related queries to future prompts when similar ambiguities are detected. Another example is predefined rule-based prioritization, where if a rule specifies that safety-critical components must always be validated first, prompts targeting these components may be prioritized to ensure compliance with safety standards. Domain-specific optimization allows prompts to be tailored based on the technical field, such as focusing on circuit continuity and signal integrity for electrical engineering diagrams or dimensional accuracy and tolerances for mechanical diagrams.

Modality-based optimization adjusts prompts based on the type of input data, such as resolving inconsistencies between textual annotations and visual representations in multi-modal scenarios. Ambiguity-driven prioritization addresses uncertainties by generating prompts that seek to clarify the most ambiguous or impactful elements first. Similarly, anomaly-driven optimization adjusts prompts to investigate discrepancies by querying additional data sources or requesting clarifying information to identify the root cause of detected anomalies.

The optimization and prioritization occur dynamically, meaning that as new inputs, interactions, or results become available, the system 102 continuously refines how prompts are generated and ranked. This adaptive approach ensures that the most critical and contextually appropriate prompts are delivered to the LLM models, enhancing the accuracy and efficiency of the enrichment and validation processes.

In an exemplary embodiment, the computing system 102 may determine a confidence score for each of at least one of one or more correlations, one or more associations, one or more classifications, and one or more patterns in the determined one or more schematic elements, based on the generated structured LLM prompt. The confidence score represents a quantitative measure of how certain the system is about the accuracy or reliability of the identified insight. The score is typically derived based on the contextual information in the schematic, the quality and completeness of the input data, and the responses generated by the large language model (LLM) through the structured prompt. For example, consider a scenario where the computing system 102 analyses an industrial pneumatic system schematic.

If the system 102 identifies a correlation between high-pressure zones and actuator failures, and the system 102 may calculate a confidence score based on factors such as the consistency of the failure data, the number of occurrences supporting this correlation, and how clearly the structured LLM prompt captures the relationship. A high confidence score, such as 0.95 (on a scale of 0 to 1), indicates strong evidence for this correlation, derived from multiple consistent data points or well-supported contextual reasoning. On the other hand, a low confidence score, such as 0.60, may indicate that the correlation is weak or based on limited or ambiguous data. Similarly, for classifications, if the system 102 classifies control valves into high-speed and low-speed categories, the confidence score could reflect the precision of the response from the LLM based on attributes such as valve specifications, response times, or contextual dependencies provided in the prompt. A higher score would imply that the classification is highly reliable and aligns with the provided contextual features. For patterns, such as identifying recurring inefficiencies in pipeline layouts, the confidence score might depend on how frequently the pattern appears in different sections of the schematic and how robustly the structured prompt guides the LLM to validate the pattern. A strong score would indicate a clear, consistent trend, while a lower score may point to variability or incomplete data.

In an exemplary embodiment, the computing system 102 may generate an LLM response to the generated structured LLM prompt, based on the determined confidence score. The LLM response comprises a validation result of at least one of the one or more correlations, the one or more associations, the one or more classifications, and the one or more patterns in the one or more schematic elements. The validation result assesses the reliability of the detected insight, indicating whether it is well-supported by data, requires further refinement, or remains inconclusive. This ensures that decision-makers may evaluate the strength of the identified relationships before implementing any changes. For instance, if the system 102 identifies a correlation between actuator failures and high-pressure zones in a pneumatic schematic, the validation result may state, 'the analysis confirms a statistically significant correlation (confidence score: 0.92) between actuator failures and high-pressure regions. Historical failure reports and operational logs indicate that actuators subjected to pressures above 6 bar exhibit a 75% higher failure rate compared to those operating below this threshold. This correlation is further supported by material stress analysis of actuator components. No contradictory data points were identified, validating the reliability of this finding'. This response ensures that the correlation is not only identified but also validated through empirical evidence. Similarly, when detecting an association between the placement of flow sensors and optimized energy consumption in an industrial cooling system, the system 102 may generate the following validation as, for example, 'the detected association between flow sensor placement and energy efficiency is validated with a confidence score of 0.88. Systems with sensors positioned within 1 meter of critical junctions show a 15% reduction in energy consumption compared to those with sensors placed farther away. However, minor discrepancies exist in cases where sensor calibration variations affect data accuracy. While the association holds for most configurations, additional testing in non-standard pipeline layouts is recommended for full validation'. This validation result highlights both the strength of the association and potential limitations, allowing engineers to refine sensor placement strategies accordingly.

For classifications, consider the system 102 categorizes control valves into high-speed and low-speed types based on response time and pressure modulation characteristics. The validation result may state as, for example, 'the classification of control valves into high-speed (response time <50ms) and low-speed (response time >50ms) categories is validated with a confidence score of 0.95'. The classification by the system 102 aligns with industry standards and empirical test data, demonstrating that valves operating below the 50ms threshold are consistently used in precision control applications. No conflicting data points were detected, confirming the robustness of this classification. This response reassures engineers that the classification method is well-supported by real-world data and industry benchmarks. When validating patterns, such as recurring inefficiencies in pipeline layouts due to excessive bends causing pressure losses, the system 102 might produce a response such as, for example, 'a recurring pattern of pressure losses due to excessive bends in industrial pipelines is confirmed with a confidence score of 0.90'. Data from multiple schematics indicate that pressure drop increases exponentially when the number of 90-degree bends exceeds three per 10-meter section. Computational fluid dynamics (CFD) simulations further support this pattern, showing a 30% loss in efficiency in such configurations. However, variations in pipe material and diameter introduce minor inconsistencies, warranting further refinement in specific cases. This validation provides engineers with both a strong pattern confirmation and insights into potential variables that may require further consideration.

In an exemplary embodiment, the computing system 102 may resolve at least one of one or more ambiguities and one or more anomalies for each of the one or more schematic elements, using at least one of pre-trained LLM models and fine-tuned LLM models, by extracting a knowledge-based data corresponding to a technical domain associated with the one or more engineering diagrams, based on the validation result. Ambiguities occur when schematic elements are unclear or open to multiple interpretations, and anomalies refer to unexpected or unusual behaviours that deviate from the expected norms. The LLMs are trained to handle these challenges by generating context-aware solutions, clarifications, or adjustments, thus enhancing the accuracy and reliability of the system 102. The validation result and confidence score serve as critical inputs, guiding the LLM in resolving these issues with varying levels of certainty based on the available data.

For example, in a hydraulic system schematic, a valve might be labelled ambiguously as a 'control valve' without specifying whether the valve is a pressure relief valve, flow control valve, or directional control valve. The LLM resolves this ambiguity by analysing the surrounding schematic elements, operational behaviour, and failure patterns identified through the validation result. If the validation result indicates a correlation between pressure fluctuations and the valve, the LLM may classify the valve as a pressure relief valve, supported by a high confidence score. This solution clarifies the ambiguity, ensuring that the interpretation aligns with the expected function of the component. Anomalies, on the other hand, occur when a component behaves unexpectedly or is placed incorrectly in the schematic, leading to suboptimal performance or operational issues. For instance, a temperature sensor may be placed in an unusual location that results in inaccurate readings. The LLM can resolve this anomaly by analysing the schematic and cross-referencing it with validated patterns from similar systems. The validation result, which might indicate that incorrect sensor placements lead to data inconsistencies, allows the system to suggest corrective actions. The LLM could recommend repositioning the sensor for more accurate readings, and the confidence score would guide the decision on whether the suggestion is reliable enough to implement immediately or if further analysis is required.

In an exemplary embodiment, the computing system 102 may enrich the one or more schematic elements in the one or more engineering diagrams using one or more LLM models, based on the validation result, by mapping engineering data from a domain-specific knowledge base corresponding to a technical domain associated with the one or more engineering diagrams. The term "enriching" refers to a process by which the processor 112 enhances, improves, augments, or supplements the schematic elements present in the engineering diagrams. This enrichment/enhancement is performed using one or more Large Language Models (LLMs). Further, enriching entails integrating additional information, attributes, or metadata into the schematic elements to provide a more comprehensive representation. This can include incorporating technical specifications, operational parameters, component identifiers, contextual descriptions, or other relevant engineering data. The objective of enriching is to improve the interpretability, accuracy, and utility of the schematic elements by embedding domain-relevant knowledge derived from the knowledge base.

For example, if the schematic element represents a mechanical component, enriching may involve associating the element with its material properties, structural dimensions, or failure thresholds. If the schematic pertains to an electrical circuit, the enrichment could involve adding electrical characteristics, connection details, or compliance information. The enrichment is performed dynamically based on the validation result to ensure that only verified and contextually accurate information is applied, to create a more informative and precise engineering diagram.

In an exemplary embodiment, the computing system 102 may output, via a display associated with an electronic device 108, the enriched one or more engineering diagrams corresponding to the one or more assets installed in the one or more technical installations.

In an exemplary embodiment, the computing system 102 may resolve the at least one of one or more ambiguities and one or more anomalies for each of the one or more schematic elements, using the one or more LLM models, by mapping the engineering data from the domain-specific knowledge base corresponding to the technical domain associated with the one or more engineering diagrams, based on the validation result. Further, the computing system 102 may augment at least one of the schematic attribute, the schematic feature, and the schematic entity derived from the LLM response to the one or more schematic elements, based on at least one of one or more semantic rules, one or more domain-specific ontologies, one or more hierarchical relationship taxonomies, the validation result, and the like, upon resolving at least one of the one or more ambiguities and the one or more anomalies, and the like.

This iterative process of updating ensures that the schematic elements are continuously refined and optimized to match accurate, up-to-date, and context-specific information. For instance, if a particular component, such as a pump, is labelled ambiguously or incorrectly in a schematic, the system may resolve this ambiguity by cross-referencing data from an engineering knowledge base. The knowledge base may comprise information regarding pump specifications, functions, and operational contexts, allowing the system to replace the ambiguous label with the correct one based on engineering standards. For example, if the schematic contains a pump labelled as 'P1' without specifying the pump type, the system 102 may reference a knowledge base to identify that 'P1' corresponds to a centrifugal pump based on a configuration of the pump and surrounding components. The system 102 may then update the schematic element iteratively, refining the classification of the component and labelling, ensuring that the engineering diagram accurately represents the role of the asset in the technical installation.

Once ambiguities and anomalies are resolved, the system 102 augments the schematic with additional features based on semantic rules, domain-specific ontologies, and hierarchical relationship taxonomies. Semantic rules refer to the logical relationships and constraints that govern how components interact within a given system, ensuring that the schematic accurately reflects these interactions. For example, if the system 102 identifies a pump as part of a water distribution system, semantic rules would dictate that the pump should be connected to pipes, valves, and sensors that regulate water flow. Domain-specific ontologies contain a knowledge framework that categorizes components in the context of a particular engineering discipline, such as mechanical, electrical, or fluid systems. By applying these ontologies, the system augments the schematic with additional contextual information, such as specifying that the pump is part of a fluid transport subsystem. Hierarchical relationship taxonomies further enhance this by defining the relationships between higher-level systems and lower-level components. For example, the ontology might indicate that the pump is part of a larger sub-system for fluid management, which in turn is part of a broader system for environmental control in a building. The system 102 may update the schematic, accordingly, ensuring that hierarchical position of each element is clear and aligned with its functional role within the larger system. Following the augmentation, the computing system 102 may output one or more enriched engineering diagrams corresponding to the one or more assets 104 in the one or more technical installations 120, via a display of one or more electronic devices 108, based on the augmentation. This represents the relationships and physical connections between the assets in the updated engineering diagram. This engineering diagram provides a high-level view of the technical installation, detailing how various assets, such as pumps, valves, sensors, and control units, are interconnected within the technical installation. For instance, the engineering diagram might show how the pump connects to the piping network, the control system, and the power supply, providing a comprehensive visualization of the technical installation topology.

In an exemplary embodiment, the computing system 102 may determine a confidence score for each of at least one of one or more correlations, one or more associations, one or more classifications, and one or more patterns in the determined one or more schematic elements, based on the generated structured LLM prompt. Further, the computing system 102 may resolve at least one of one or more ambiguities and one or more anomalies for each of the one or more schematic elements, using at least one of the pre-trained LLM models and the fine-tuned LLM models, based on the validation result and the determined confidence score.

In an exemplary embodiment, the computing system 102 may iteratively update the one or more schematic elements in the one or more engineering diagrams, based on resolving at least one of one or more ambiguities and one or more anomalies, and an engineering data from a knowledge base. In an exemplary embodiment, the computing system 102 may identify the one or more schematic elements comprising one or more engineering annotations in the one or more engineering diagrams. Further, the computing system 102 may determine a contextual relevance of the identified one or more engineering annotations by associating the one or more engineering annotations with one or more components in spatial proximity to the one or more engineering annotations, and a pre-defined engineering rules. Further, the computing system 102 may segment the one or more engineering annotations into a plurality of segmented annotations, using at least one of the pre-trained LLM models and the fine-tuned LLM models. Furthermore, the computing system 102 may predict the one or more schematic elements comprising one or more first tags, to resolve ambiguities in the plurality of segmented annotations, by analysing a pre-defined engineering standards and referencing contextual schematic elements within the one or more engineering diagrams. Additionally, the computing system 102 may assign one or more second tags to the one or more engineering annotations in the one or more engineering diagrams, based on the prediction.

FIG. 2 is a block diagram of a computing system 102 such as those shown in FIG. 1, depicting various components to implement embodiments of the present invention. In FIG. 2, the computing system 102 comprises a processor(s) 202, an accessible memory 204, a communication interface 206, a network interface 208, an input/output unit 210, and a bus 212.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 202 may also include embedded controllers, such as generic or programmable logic devices or arrays, application specific integrated circuits, single-chip computers, and the like.

The memory 204 may be non-transitory volatile memory and non-volatile memory. The memory 204 may be coupled for communication with the processor(s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 comprises an enriched engineering diagram generating module 214 stored in the form of machine-readable instructions on any of the above-mentioned storage media and may be in communication with and executed by the processor(s) 202.

When executed by the processor(s) 202, the enriched engineering diagram generating module 214 causes the processor(s) 202 to generate domain-knowledge enriched engineering diagrams corresponding to assets in a technical installation in a computing environment or computer-simulated environment. The enriched engineering diagram generating module 214 causes the processor(s) 202 to receive, from one or more data sources (not shown), one or more engineering diagrams corresponding to one or more assets installed in one or more technical installations. The one or more data sources and the one or more engineering diagrams comprise at least one of a structured data and an unstructured data. Further, the enriched engineering diagram generating module 214 causes the processor(s) 202 to determine one or more schematic elements in the received one or more engineering diagrams comprising one or more topologies of the one or more assets corresponding to the one or more technical installations, using one or more visual recognition techniques. The one or more schematic elements comprises at least one of a schematic attribute, a schematic feature, and a schematic entity. Furthermore, the enriched engineering diagram generating module 214 causes the processor(s) 202 to identify at least one of one or more correlations, one or more associations, one or more classifications, and one or more patterns in the determined one or more schematic elements, based on one or more contextual features of the one or more schematic elements.

Additionally, the enriched engineering diagram generating module 214 causes the processor(s) 202 to generate a structured Large Language Model (LLM) prompt corresponding to the identified at least one of one or more correlations, one or more associations, one or more classifications, and one or more patterns. Further, the enriched engineering diagram generating module 214 causes the processor(s) 202 to determine a confidence score for each of at least one of one or more correlations, one or more associations, one or more classifications, and one or more patterns in the determined one or more schematic elements, based on the generated structured LLM prompt.

Further, the enriched engineering diagram generating module 214 causes the processor(s) 202 to generate an LLM response to the generated structured LLM prompt, based on the determined confidence score. The LLM response comprises a validation result of at least one of the one or more correlations, the one or more associations, the one or more classifications, and the one or more patterns in the one or more schematic elements.

Further, the enriched engineering diagram generating module 214 causes the processor(s) 202 to enrich the one or more schematic elements in the one or more engineering diagrams using one or more LLM models, based on the validation result, by mapping engineering data from a domain-specific knowledge base corresponding to a technical domain associated with the one or more engineering diagrams. Furthermore, the enriched engineering diagram generating module 214 causes the processor(s) 202 to output via a display associated with an electronic device, the enriched one or more engineering diagrams corresponding to the one or more assets installed in the one or more technical installations.

Furthermore, the enriched engineering diagram generating module 214 causes the processor(s) 202 to resolve at least one of one or more ambiguities and one or more anomalies for each of the one or more schematic elements, using at least one of pre-trained LLM models and fine-tuned LLM models, by extracting a knowledge-based data corresponding to a technical domain associated with the one or more engineering diagrams, based on the validation result. Additionally, the enriched engineering diagram generating module 214 causes the processor(s) 202 to iteratively update the one or more schematic elements in the one or more engineering diagrams, based on resolving at least one of one or more ambiguities and one or more anomalies, and an engineering data from a knowledge base. Further, the enriched engineering diagram generating module 214 causes the processor(s) 202 to augment one or more schematic features to the one or more schematic elements, based on at least one of one or more semantic rules, one or more domain-specific ontologies, and one or more hierarchical relationship taxonomies.

In an exemplary embodiment, for generating the one or more structured LLM prompts, the enriched engineering diagram generating module 214 causes the processor(s) 202 to may generate a disambiguation resolving prompt from the one or more structured LLM prompts for disambiguating a symbol classification in the determined one or more schematic elements. The one or more LLM models extract the engineering data from the domain-specific knowledge base, for resolving one or more ambiguities in the symbol classification based on analysing the one or more contextual features of the one or more schematic elements. In an exemplary embodiment, the enriched engineering diagram generating module 214 causes the processor(s) 202 to may generate an association validating prompt from the one or more structured LLM prompts for validating the one or more associations between text and symbols in the determined one or more schematic elements. The one or more LLM models analyse one or more relational constraints, one or more contextual dependencies, and one or more engineering semantic diagrams for determining consistency and correctness in mapping the text and the symbols. Further, the enriched engineering diagram generating module 214 causes the processor(s) 202 to may generate a domain-based refining prompt for a technical domain-based completion and correction of the one or more schematic elements. The one or more LLM models map pre-defined engineering heuristics, syntactic and semantic constraints, and rule-based inferences to refine and enrich the one or more engineering diagrams. Additionally, the enriched engineering diagram generating module 214 causes the processor(s) 202 to may generate a pattern decomposing prompt for decomposing the one or more patterns in the one or more schematic elements. The one or more LLM models extract structured representations, identify recurring relationships, and optimize engineering processes based on at least one of a historical data, a predefined constraint, a user-specified parameter, and the like. The one or more LLM prompts are dynamically optimized and prioritized based on at least one of one or more historical interactions with the one or more LLM models, one or more predefined rules, one or more technical domains, one or more modalities, the one or more ambiguities, the one or more anomalies, and the like.

In an exemplary embodiment, the enriched engineering diagram generating module 214 causes the processor(s) 202 to may resolve the at least one of one or more ambiguities and one or more anomalies for each of the one or more schematic elements, using the one or more LLM models, by mapping the engineering data from the domain-specific knowledge base corresponding to the technical domain associated with the one or more engineering diagrams, based on the validation result. Further, the enriched engineering diagram generating module 214 causes the processor(s) 202 to may augment at least one of the schematic attribute, the schematic feature, and the schematic entity derived from the LLM response to the one or more schematic elements, based on at least one of one or more semantic rules, one or more domain-specific ontologies, one or more hierarchical relationship taxonomies, the validation result, and the like, upon resolving at least one of the one or more ambiguities and the one or more anomalies, and the like.

In another exemplary embodiment, for identifying at least one of the one or more correlations, the one or more associations, the one or more classifications, and the one or more patterns in the determined one or more schematic elements, the enriched engineering diagram generating module 214 causes the processor(s) 202 to correlate the extracted one or more schematic elements with at least one of the schematic attribute, the schematic feature, and the schematic entity. Additionally, the enriched engineering diagram generating module 214 causes the processor(s) 202 to generate a first semantic relationship for the extracted one or more schematic elements. Additionally, the enriched engineering diagram generating module 214 causes the processor(s) 202 to generate the structured LLM prompt corresponding to the generated first semantic relationship.

Further, the enriched engineering diagram generating module 214 causes the processor(s) 202 to resolve at least one of the one or more ambiguities and the one or more anomalies in the first semantic relationship for the extracted one or more schematic elements, using at least one of pre-trained LLM models and fine-tuned LLM models, by extracting a knowledge-based data corresponding to a technical domain associated with the one or more engineering diagrams, based on a LLM response to the LLM prompt. The process ensures that each extracted element is not only identified, however, also contextualized within the broader schematic framework. For example, in an electrical substation diagram, an extracted element such as a transformer need to be correlated with attributes such as voltage capacity, features such as cooling mechanisms, and entities such as circuit breakers and busbars that are functionally associated with it. This correlation step ensures that extracted schematic elements retain their engineering significance rather than existing as isolated components. Once the schematic elements are correlated, the module 214 may generate a first semantic relationship for the extracted elements. This involves defining logical and functional connections between components based on engineering principles. For instance, in a fluid dynamics schematic, if a centrifugal pump is extracted as an element, its semantic relationship might include connections to intake and discharge pipes, control valves, and pressure sensors. The system 102 then generates a structured LLM prompt corresponding to this semantic relationship, formulating a query that helps validate and refine the identified relationships. A structured LLM prompt may be, for example, 'given that a centrifugal pump (P1) is connected to two pipelines (inlet and outlet), a pressure sensor (S1), and a control valve (V1), determine if the configuration is valid for a water distribution network operating at 10 bar pressure'. This prompt allows the pre-trained LLM model and fine-tuned LLM model to assess the accuracy of the relationship by cross-referencing domain-specific engineering knowledge.

Following this, the module 214 may use the pre-trained LLM models and the fine-tuned LLM models to resolve ambiguities and anomalies in the generated semantic relationships. Ambiguities arise when multiple interpretations of a connection exist, while anomalies occur when a behaviour of the element or placement deviates from expected norms. For example, in a power grid schematic, if a transformer is linked to an incorrectly rated circuit breaker, the LLM may detect this as an anomaly based on industry standards. The LLM response to the prompt may state as 'the circuit breaker (CB1) rated at 10kA is insufficient for the transformer (T1) with a peak short-circuit current of 15kA. A breaker rated at 20kA or above is recommended'. Based on this response, the system 102 may update the semantic relationship, ensuring that it aligns with validated engineering principles.

In another exemplary embodiment, for the validation result in the LLM response, the enriched engineering diagram generating module 214 causes the processor(s) 202 to cross-referencing the one or more schematic elements in the one or more engineering diagrams with one or more domain-specific rules stored in the knowledge base, using the pre-trained LLM models and/or the fine-tuned LLM models. Further, the enriched engineering diagram generating module 214 causes the processor(s) 202 to apply one or more engineering principles and downstream use in engineering workflows for the cross-referenced one or more schematic elements, to validate a correctness of one or more inferred semantic relationships. Furthermore, the enriched engineering diagram generating module 214 causes the processor(s) 202 to output the validated correctness of one or more inferred semantic relationships of the schematics entities. The validation process includes cross-referencing schematic elements with predefined engineering standards using at least one of pre-trained LLM models and fine-tuned LLM models. For example, in an electrical power distribution schematic, if a circuit breaker is inferred to be associated with a transformer, the system 102 may cross-reference this relationship with domain-specific rules, such as voltage and current compatibility, protection settings, and industry standards (e.g., IEC 60947 or IEEE 242, and the like). If a mismatch is found, such as a low-rated breaker being assigned to a high-capacity transformer, the system 102 may flags the issue for correction.

Once cross-referencing is complete, the module 214 may apply engineering principles and evaluates how the schematic elements may function in downstream engineering workflows. This step ensures that inferred semantic relationships align with real-world application requirements. For instance, in a mechanical piping schematic, an inferred relationship between a high-pressure steam pipeline and a control valve may need to be validated against principles of thermodynamics and material compatibility. If the control valve is made of a material unsuitable for high temperatures, the system 102 may identify this as an inconsistency, ensuring that the schematic remains viable for actual installation and operation.

Furthermore, the module 214 may output the validated correctness of inferred semantic relationships, providing users/engineers with an assurance that the schematic elements and their interconnections comply with technical standards and practical implementation constraints. For example, in a fluid dynamics system, if a pump is inferred to be connected to a discharge line without a check valve, the system might flag this as an invalid relationship because check valves are required to prevent backflow. The validated result confirms that a check valve may need to be included in the schematic to maintain operational efficiency.

In an exemplary embodiment, for generating the LLM response to the structured LLM prompt, the enriched engineering diagram generating module 214 causes the processor(s) 202 to identify a set of semantic elements within an operating context of the one or more assets in the one or more engineering diagrams. Furthermore, the enriched engineering diagram generating module 214 causes the processor(s) 202 to analyse one or more feasible combinations of the identified set of semantic elements, based on a pre-defined constraints and operational parameters within the operating context of the one or more engineering diagrams. Additionally, the enriched engineering diagram generating module 214 causes the processor(s) 202 to decompose the set of schematic elements into one or more functional units based on the operating context of the one or more assets. Decomposing the set of schematic elements into one or more functional units comprising, segregating at least one of, but not limited to, one or more text patterns, labels, symbols, annotations, functional components, connections, graphical elements, and the like, based on functionalities and interconnections of each of, but not limited to, the functional components, instruments, pipelines, nozzles, and the like, in the one or more assets. This process begins with recognizing a set of semantic elements that define the operational characteristics of the assets, such as, but not limited to, labels, symbols, functional components, their relationships, and the like. For instance, in a power distribution network schematic, semantic elements may include transformers, circuit breakers, busbars, relays, and their respective annotations. The system 102 may identify how these elements interact within the electrical grid, ensuring that role of each component is properly defined.

Once the semantic elements are identified, the module 214 may analyse feasible combinations of these elements based on predefined constraints and operational parameters. This analysis ensures that the identified relationships between components are technically valid and aligned with engineering principles. For example, in a hydraulic control system, a feasible combination may need to ensure that a pressure relief valve is always positioned downstream of a high-pressure pump to prevent system failure. If an engineering diagram suggests an incorrect placement, the module 214 may identify the inconsistency and refines the structured LLM prompt to account for proper positioning. The predefined constraints, such as pressure ratings, flow rates, electrical load capacities, and the like, may help the system 102 to validate whether a combination is practical and compliant with industry standards.

Based on the feasibility analysis, the system 102 may decompose the schematic elements into functional units to enhance clarity and correctness. This decomposition involves segregating different aspects of the schematic, including text patterns, labels, symbols, annotations, graphical elements, and their interconnections, based on their functional roles. For instance, in a process flow diagram (PFD) of a chemical plant, the system 102 may decompose elements into distinct functional units, such as, but not limited to, reactor systems, heat exchangers, distillation columns, and pumping stations. Within each functional unit, the system 102 may segregate specific components such as, but not limited to, pipelines, control valves, pressure sensors, and heat transfer surfaces based on their interactions and dependencies.

For example, in an industrial piping and instrumentation diagram (P&ID), the system 102 may analyse a boiler unit and decompose the boiler unit into subunits, including the fuel supply system, combustion chamber, heat exchanger, and steam output. Each sub-unit may be analysed separately, ensuring that components such as, but not limited to, pressure gauges, safety valves, control sensors, and the like, are correctly associated with their respective subsystems. By decomposing schematic elements in this manner, the system 102 may ensure that each element is accurately interpreted within its functional and operational context, thereby generating an LLM response that aligns with real-world engineering workflows.

Further, the enriched engineering diagram generating module 214 causes the processor(s) 202 to evaluate a feasibility of each of a combination of the decomposed set of schematic elements to validate a compatibility parameter and an optimization parameter within the operating context. Furthermore, the enriched engineering diagram generating module 214 causes the processor(s) 202 to output one or more combinations of the set of schematic elements with optimal feasibility within the operating context. The evaluation includes validating each combination against compatibility and optimization parameters specific to the operating context of the system. For instance, in an electrical substation schematic, decomposed elements such as circuit breakers, transformers, busbars, and protective relays must be assessed for compatibility. The system 102 may evaluate whether the voltage and current ratings of a circuit breaker align with the power transformer it protects. If a transformer rated at 66 kV is paired with a circuit breaker rated for only 33 kV, the system 102 may identify this as an incompatible combination and rejects it. Similarly, in a hydraulic system, if a high-pressure pump is paired with pipes that cannot withstand the operating pressure, the system flags this as an incompatibility issue.

Beyond compatibility, the module 214 may evaluate optimization parameters, ensuring that the selected combination operates efficiently within the constraints of the system. In an industrial piping and instrumentation diagram (P&ID), multiple feasible configurations may exist for connecting a heat exchanger to a process flow. The system 102 may assess each configuration based on factors such as pressure drop, thermal efficiency, and energy consumption. If two pipeline routing options exist-one with minimal bends and another with multiple turns-the system 102 may identify the first option as optimal due to reduced pressure losses and improved flow efficiency.

Once the feasibility evaluation is complete, the module outputs the combination of schematic elements that provide a most optimal feasibility within the given operating context. For example, in a heating, ventilation, and air conditioning (HVAC) system, multiple airflow ducting designs might be considered. The system 102 mat assess each design for airflow efficiency, cost-effectiveness, and energy consumption. The system 102 then outputs the configuration that minimizes energy losses while ensuring uniform temperature distribution. By systematically evaluating compatibility and optimization, the computing system 102 ensures that engineering diagrams are not only technically correct but also optimized for real-world application. This approach enhances design accuracy, reduces the risk of failure, and ensures that the final schematic represents the best possible configuration for operational efficiency.

The input-output unit 210 may include input devices a keypad, touch-sensitive display, camera (such as a camera receiving gesture-based inputs), and the like, capable of receiving one or more input signals, such as user commands to process equipment data. Also, the input-output unit 210 may be a display unit for displaying a graphical user interface which visualizes the multimodal data and also displays the status information associated with each set of actions performed on the multimodal data. The set of actions may include data entry, data modification or data display. The bus 212 acts as interconnect between the processor 202, the memory 204, and the input-output unit 210.

Those of ordinary skilled in the art will appreciate that the hardware depicted in FIG. 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of a computing system 102 as is unique to the present disclosure or necessary for an understanding of the present disclosure is depicted and described. The remainder of the construction and operation of the computing system 102 may conform to any of the various current implementation and practices known in the art.

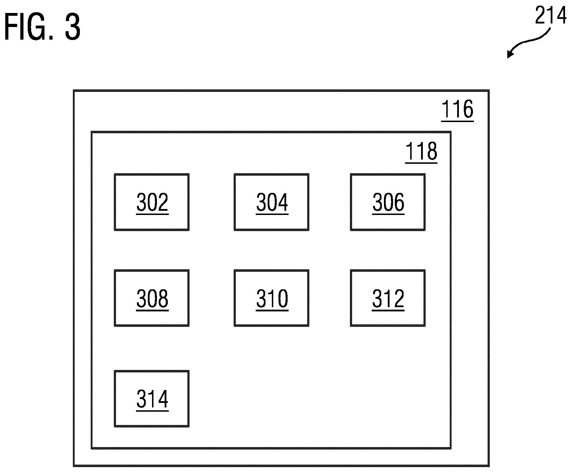

FIG. 3 is a block diagram of an enriched engineering diagram generating module 214, such as those shown in FIGs. 1 and 2, capable of generating domain-knowledge enriched engineering diagrams corresponding to assets in a technical installation, according to the embodiment of the present invention. The computer-simulated environment 120 may include at least one of a computing environment, a metaverse environment, a virtual environment, an augment environment, a computing environment, a 3D environment, a point cloud environment, and the like. In FIG. 3, the enriched engineering diagram generating module 214 comprises a data receiving module 302, a schematic element determining module 304, a semantic relationship identifying module 306, a prompt generating module 308, a response generating module 310, an engineering diagram enriching module 312, and an enriched engineering diagram outputting module 314.

In an exemplary embodiment, the data receiving module 302 may receive, from one or more data sources (not shown), one or more engineering diagrams corresponding to one or more assets installed in one or more technical installations 120. The one or more data sources and the one or more engineering diagrams comprise at least one of a structured data and an unstructured data. In an exemplary embodiment, the schematic element determining module 304 may determine one or more schematic elements in the received one or more engineering diagrams comprising one or more topologies of the one or more assets corresponding to the one or more technical installations, using one or more visual recognition techniques. The one or more schematic elements comprises at least one of a schematic attribute, a schematic feature, and a schematic entity. In an exemplary embodiment, the semantic relationship identifying module 306 may identify at least one of one or more correlations, one or more associations, one or more classifications, and one or more patterns in the determined one or more schematic elements, based on one or more contextual features of the one or more schematic elements.

In an exemplary embodiment, the prompt generating module 308 may generate a structured Large Language Model (LLM) prompt corresponding to the identified at least one of one or more correlations, one or more associations, one or more classifications, and one or more patterns.

In an exemplary embodiment, the response generating module 310 may generate an LLM response to the generated one or more structured LLM prompts. The LLM response comprises a validation result of at least one of the one or more correlations, the one or more associations, the one or more classifications, and the one or more patterns in the one or more schematic elements. In an exemplary embodiment, the engineering diagram enriching module 312 may enrich the one or more schematic elements in the one or more engineering diagrams using one or more LLM models, based on the validation result, by mapping engineering data from a domain-specific knowledge base corresponding to a technical domain associated with the one or more engineering diagrams. In an exemplary embodiment, the enriched engineering diagram outputting module 314 may via a display associated with an electronic device 108, the enriched one or more engineering diagrams corresponding to the one or more assets 104 installed in the one or more technical installations 120.

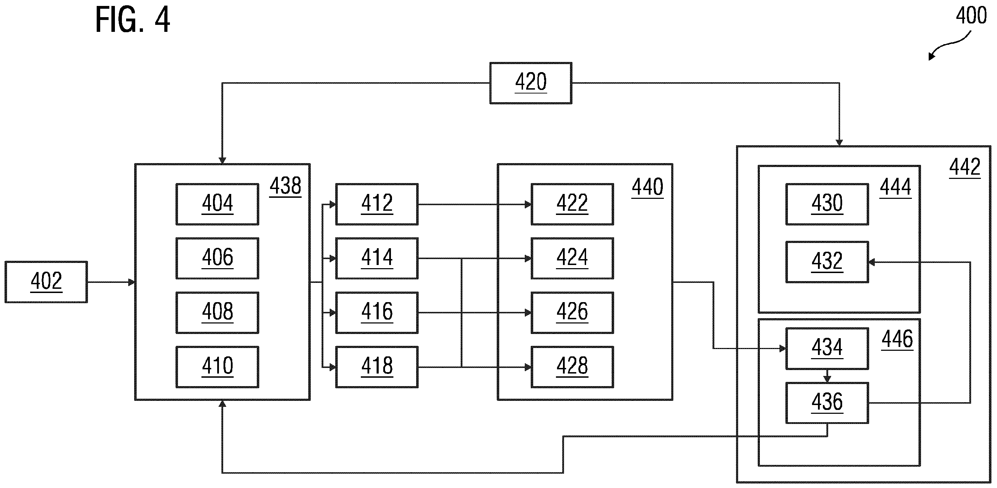

FIG. 4 is a flow diagram depicting an exemplary method 400 of digitization of an engineering diagram, according to an embodiment of the present invention.

At step 402, the method 400 comprises receiving, by the processor 202, from one or more data sources (not shown), one or more engineering diagrams corresponding to the one or more assets 104 installed in one or more technical installations 120.

At step 404, the method 400 comprises, performing, by the processor 202, optical character recognition (OCR), on the received one or more engineering diagrams, if the one or more engineering diagrams are image or documents. At step 406, the method 400 comprises, extracting, by the processor 202, data from the received one or more engineering diagrams, using one or more deep learning models. At step 408, the method 400 comprises, extracting, by the processor 202, data from the received one or more engineering diagrams, using one or more computer vision techniques. At step 410, the method 400 comprises, detecting, by the processor 202, one or more geometric association between one or more components of the one or more assets in the one or more engineering diagrams. The steps 404, 406, 408 and 410 may be performed using an extraction layer 438.

At step 412, the method 400 comprises, deriving, by the processor 202, symbols associated with the one or more engineering diagrams, from the extraction layer 438. At step 414, the method 400 comprises, deriving, by the processor 202, text associated with the one or more engineering diagrams, from the extraction layer 438. At step 416, the method 400 comprises, identifying, by the processor 202, connections associated with the one or more engineering diagrams, from the extraction layer 438. At step 418, the method 400 comprises, identifying, by the processor 202, associations associated with the one or more assets in the one or more engineering diagrams, from the extraction layer 438. The associations may be identified by converting symbol to text, text to connections, and the like.

At step 422, the method 400 comprises, disambiguating, by the processor 202, one or more symbol class from the derived symbols. At step 424, the method 400 comprises, validating, by the processor 202, the associations between text and derived symbols. At step 426, the method 400 comprises, correcting, by the processor 202, the text, symbols, associations, and connections, based on the technical domain of the engineering diagrams. At step 428, the method 400 comprises, decomposing, by the processor 202, the one or more patterns of the text, symbols, associations, and connections. The steps 422, 424, 426, and 428, are performed using prompt creation layer 440 for generating structed LLM prompt.

At step 434, the method 400 comprises, interrogating, by the processor 202, one or more LLM models using the generated structed LLM prompt in the prompt creation layer 440. At step 436, the method 400 comprises, obtaining, by the processor 202, engineering knowledge response from the knowledge base, based on a response form the one or more LLM models. The steps 434 and 436 is performed in a LLM enrichment layer 446. In case of disambiguation in the symbols, symbols category, associations, and the like, a disambiguation data is sent to the extraction layer 438. The engineering response may be used for tag decomposition, feasible combination of elements, and operating context.

At step 432, the method 400 comprises, mapping, by the processor 202, the engineering knowledge response and the LLM response with semantic rules data. At step 430, the method 400 comprises, mapping, by the processor 202, the engineering knowledge response and the LLM response with semantic ontology data. The steps 430 and 432 may be performed in a semantic enrichment layer 442. At step 420, the method 400 comprises, determining, by the processor 202, a user profile and meta data associated with the user profile to enrich the engineering knowledge response and the LLM response, based on the mapped semantic ontology data.

Consider, a piping and instrumentation diagram (P&ID) schematic diagram. A process industry-aware large language model (LLM) may be used to interrogated during the extraction process of the P&ID schematic diagram. The interrogation may complement ontology-based queries to enhance the extracted entities through semantic enrichment. The interrogation process may be automated via, for example, an application programming interface (API) query directed at a LLM model during extraction. In some scenarios, the system 103 may trigger to manual intervention by a user to fill gaps in the extraction process using a manual review interface. The LLM may be either a fine-tuned existing model or trained using a few-shot learning approach to improve contextual understanding of process industry terminology by the LLM model. For this approach, several large language models (LLMs) may be used, either in their base form or fine-tuned for process industry applications. For example, the LLM models may include, but not limited to, a generative artificial intelligence (AI) model, a contrastive language-image pretraining model, a text-to-text transfer transformer model, a bidirectional encoder representation from transformers (BERT) model, a visual generative AI model, a graph-based model, a layout language model, a deep mind model, and the like. A versatile general-purpose model may be fine-tuned or adapted using few-shot learning. The model can handle complex text classification tasks, semantic enrichment, and contextual disambiguation. For example, a generative pre-training transformer may be queried to determine whether a given tag corresponds to an instrument, equipment, or piping component based on surrounding text.

In the context of engineering diagrams, large language models (LLMs) may be used for a plurality of tasks, from interpreting diagrams to generating new diagrams, and even assisting in design decision-making. In one application of interpretation of engineering diagrams, the LLMs may convert engineering diagrams into detailed natural language descriptions. For instance, when given a circuit schematic, a LLM can explain the components, their functions, and how they interact. This interpretation may help engineers who need a quick overview or clarification of complex diagrams. Another application may include transforming diagrams into structured data. LLMs can extract essential information, such as the components and their relationships, from diagrams such as flowcharts or piping and instrumentation diagrams (P&IDs). This process is important for converting unstructured visual data into formats such as XML or JSON, making it easier for further computational analysis or automation. For example, a LLM may recognize the different components in a P&ID (e.g., pumps, valves, tanks) and represent them as an interconnected graph or database.

In addition, LLMs may assist in decision-making during the design process by analysing diagrams and suggesting optimizations or identifying potential issues. The LLM models may compare current designs against established principles or best practices to ensure safety, efficiency, and cost-effectiveness. For example, in the context of civil engineering, an LLM could analyse a bridge design and suggest improvements to load distribution or structural integrity. In one example, multimodal models may integrate both textual and visual data that are particularly effective in complex cases. These models can comprehend diagrams along with accompanying textual descriptions or annotations. For instance, a multimodal LLM could analyse both the visual components of a circuit diagram and the corresponding specifications to provide a thorough analysis of the behaviour of the system or performance.

Additionally, the LLMs may enhance diagram-based question-answering systems. By parsing a given diagram and context, the models may answer specific questions about the design, such as "What is the flow rate in this piping system?" or "Where is the pump located in this schematic?" This capability allows users to interact with diagrams in a more intuitive way, retrieving information directly from the visual content without needing to manually search through documents. Further, another instance, a pathways language model may include technical language understanding and may be fine-tuned for process industry applications. The model may, for instance, resolve whether a thick line in a P&ID represents a main piping line or an auxiliary connection by leveraging its pattern recognition capabilities. Further, a meta-AI based LLM model may fine-tuning for domain-specific applications. could the LLM model may be trained using process industry datasets to better understand standard P&ID structures, enabling it to identify missing symbols in extracted diagrams, such as a missing valve between a pump and a boiler. Further, a cloud based LLM model may be used for interpretability and contextual understanding, for validating logical consistency in extracted symbols. For example, if two pumps are incorrectly extracted when one should actually be a motor, the model could recognize and correct the inconsistency. Further, another LLM model with strong inference capabilities, may assist in metadata-based constraints. If a plant's location is specified as Siberia, the model could restrict the selection of pumps that are unsuitable for cold climates.

Furthermore, a multilingual LLM model may be beneficial in industries operating across different regions. The LLM model may help standardize and enrich P&ID extractions where terminology may vary across language-specific documentation. A text-to-text based LLM model may be optimized for text-to-text tasks, which may be used to enhance missing attributes of extracted entities. For example, it could differentiate between an instrument located in the field versus one that is remotely operated by analysing context cues.

The purpose of interrogating the LLM is to resolve ambiguities in the extracted entities and refine the accuracy of their classification. For instance, the model may be asked to determine whether a given text corresponds to an instrument, equipment, or a pipe tag. Once a tag is classified, the LLM may further decompose constituent fragments of the tags for better granularity. Similarly, when equipment is identified, the model may disambiguate a function of the equipment, such as distinguishing between a boiler with or without an agitator. In cases where an instrument is extracted, the LLM model may predict other essential entities that must be present in a vicinity based on standard process industry configurations.

The interrogation framework may also help in resolving uncertainties related to connections between components. For example, if a connection is represented by a dotted line, the LLM model may determine whether it signifies a pipe or a signal. Likewise, for a thick line, the LLM model may establish whether the thick line represents a main piping line or an auxiliary connection. Additionally, the system may assess whether a missing symbol exists between a pair of extracted components, such as identifying the necessity of a valve between a pump and a boiler.

Beyond structural verification, the LLM model may also validate the logical consistency of extracted symbols. If an extraction identifies two pumps connected in a manner where one should actually be a motor, the model could detect this inconsistency. Similarly, metadata constraints may be leveraged to refine the set of attributes assigned to symbols. For example, if a plant is located in one geographical area, the LLM model may prevent the assignment of tropical country pumps that are unsuitable for cold climates. The LLM model may also enrich missing attributes, such as distinguishing between an instrument located in the field versus one that is remotely operated.

Further, the interrogation mechanism may clarify associations between extracted text and symbols, ensuring that annotations are correctly linked to respective components. The aforementioned examples illustrate a context-aware adaptive refinement of extracted entities. By using both structured ontology-based queries and dynamic LLM interrogation, the system 102 enhances the accuracy, completeness, and logical coherence of extracted process industry data.

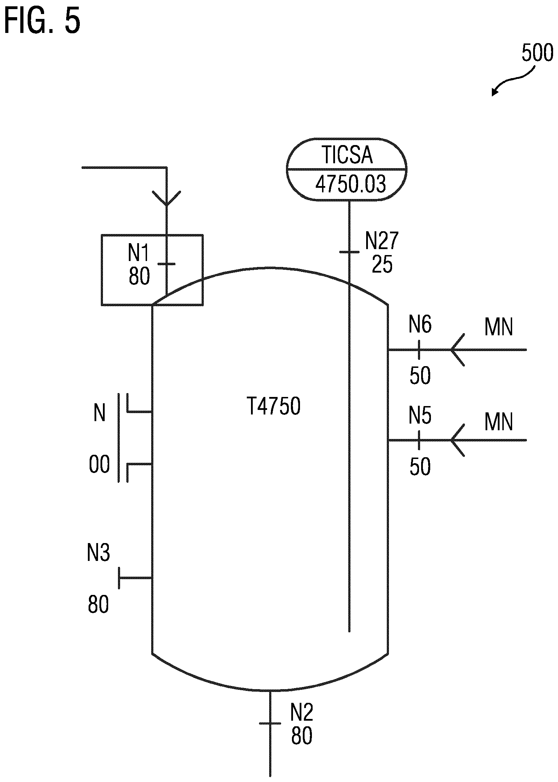

FIG. 5 is a schematic diagram depicting an exemplary engineering diagram comprising an ambiguity in a symbol associated with a nozzle attached to a tank 500, according to the embodiment of the present invention. Consider, an engineering diagram comprising P&ID section of the tank 500. The diagram in FIG. 5 is a P&ID snippet showing a tank 500 (T4750) with several nozzles (N1, N3, N5, N6, N7, and the like. A nozzle 'N1' is highlighted and marked with the text 'N1\N80'. Further, there is an incoming pipe connected to the Nozzle N1. A temperature/instrument control system sensor (TICSA) is shown at the top. The text 'N1\N80' appears near the nozzle (N1), however, the text is ambiguous in its reference. Further, there are flow directions (arrows) indicating fluid movement.

In an example, the process of resolving the ambiguity of the extracted text 'N1\N80' using LLM models and AI techniques may initially include text extraction, in which the text 'N1\N80' is extracted from the P&ID. Further, unclear references include that the extracted text does not explicitly clarify whether 'N1\N80' refers to the nozzle (N1) on the tank 500, or an incoming pipe (possibly schedule 80 pipe). Further, there may be ambiguous association, as there are two potential interpretations, in which the 'N1' refers to a tank nozzle (N1), and 'N80' may refer to 'Schedule 80 Pipe', making it uncertain whether it describes the pipe specification or the nozzle itself. The LLM-based ranking of candidates may be used to resolve the ambiguity. A structured prompt is used to query a Large Language Model (LLM) model to determine the most likely association. The LLM ranks possible interpretations based on contextual knowledge. Based on the ranking, the most probable association is the 'N1\N80' is linked to the nozzle (N1) of the tank rather than the incoming pipe.

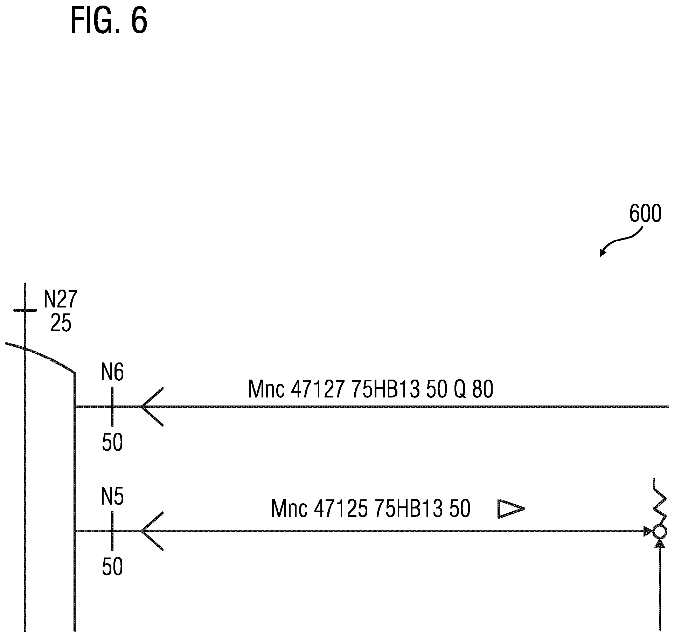

FIG. 6 is a schematic diagram depicting an exemplary engineering diagram comprising an ambiguity in a tag associated with a pipeline 600, according to the embodiment of the present invention. Consider, a piping and instrumentation diagram (P&ID) diagram of a pipeline 600 connecting to a tank (or another piece of equipment), as shown in FIG. 6. Nozzles 'N5' and 'N6' are labelled and have flow lines (pipes) attached to them. Two text labels are visible such as 1. 'MNc 47127 75HB13 50 Q 80' (connected to N6), and 2. 'MNc 47125 75HB13 50' (connected to N5). The extracted text 'MNc ...' appears near the pipes, suggesting it might refer to pipe specifications or fluid details.

The text 'MNc ...' may be extracted from the P&ID and initially associated with the pipe due to its proximity to the flow lines. However, the meaning of the text is ambiguous because there is no legend in the diagram to clarify each component. A large language model (LLM) may be used to analyse and decompose the text into meaningful components. The structured prompt approach allows the individual elements of the text to be identified. For example, '75HB13' may be fluid code (likely referring to the type of fluid carried by the pipe). The number '80' may be nominal diameter (suggesting the pipe's size is 80 mm or another relevant unit).

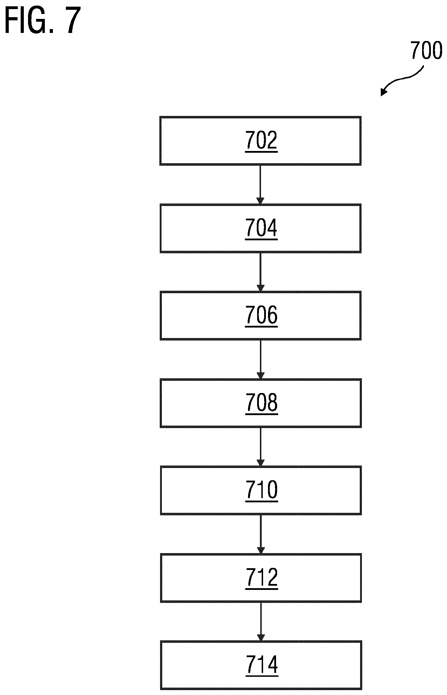

FIG. 7 is a process flowchart illustrating an exemplary method 700 of generating domain-knowledge enriched engineering diagrams corresponding to assets in a technical installation, according to the embodiment of the present invention.

At step 702, the method 700 may include receiving, by the processor 202, from one or more data sources, one or more engineering diagrams corresponding to one or more assets installed in one or more technical installations. The one or more data sources and the one or more engineering diagrams comprise at least one of a structured data and an unstructured data.

At step 704, the method 700 may include determining, by the processor 202, one or more schematic elements in the received one or more engineering diagrams comprising one or more topologies of the one or more assets installed in the one or more technical installations, using one or more visual recognition techniques. The one or more schematic elements comprise at least one of a schematic attribute, a schematic feature, and a schematic entity.

At step 706, the method 700 may include identifying, by the processor 202, at least one of one or more correlations, one or more associations, one or more classifications, and one or more patterns in the determined one or more schematic elements, based on one or more contextual features of the one or more schematic elements.

At step 708, the method 700 may include generating, by the processor 202, one or more structured large language model (LLM) prompts corresponding to the identified at least one of one or more correlations, one or more associations, one or more classifications, and one or more patterns.

At step 710, the method 700 may include generating, by the processor 202, an LLM response to the generated one or more structured LLM prompts, wherein the LLM response comprises a validation result corresponding to at least one of the one or more correlations, the one or more associations, the one or more classifications, and the one or more patterns in the one or more schematic elements. The generated LLM response is based on a confidence score.

At step 712, the method 700 may include enriching, by the processor 202, the one or more schematic elements in the one or more engineering diagrams using one or more LLM models, based on the validation result, by mapping engineering data from a domain-specific knowledge base corresponding to a technical domain associated with the one or more engineering diagrams.

At step 714, the method 700 may include outputting, by the processor 202, via a display associated with an electronic device 108, the enriched one or more engineering diagrams corresponding to the one or more assets 104 installed in the one or more technical installations 120.

The order in which the method 700 is described is not intended to be construed as a limitation, and any number of the described method blocks may be combined or otherwise performed in any order to implement the method 700 or an alternate method. Additionally, individual blocks may be deleted from the method 700 without departing from the spirit and scope of the ongoing description. Furthermore, the method 700 may be implemented in any suitable hardware, software, firmware, or a combination thereof, that exists in the related art or that is later developed. The method 700 describes, without limitation, the implementation of the computing system 102. A person of skill in the art will understand that method 700 may be modified appropriately for implementation in various manners without departing from the scope of the ongoing description.

Embodiments of the present invention discloses methods and systems for generating domain-knowledge enriched engineering diagrams corresponding to assets in a technical installation. The present invention enhances accuracy by introducing LLM-based reasoning, which functions similarly. This eliminates the need for additional model training or explicit human review, thereby significantly reducing the human effort required for manual verification and correction.

While structured vocabularies may improve extraction quality, organizations use non-standard representations for engineering tags and annotations. The proposed LLM-based system and method provides the flexibility to work with diverse, organization-specific formats, ensuring that even non-standardized nomenclature can be accurately interpreted. This adaptability makes the system highly versatile across different industrial environments.

Furthermore, the present invention incorporates a context-aware interpretation using engineering discipline knowledge. Unlike rule-based systems that require prior encoding of domain-specific information, LLMs may infer commonly known engineering standards. For instance, the system understands that a valve is associated with fluid flow and not electric power, and that specific tag structures apply to pipelines rather than electrical devices. This capability allows for automatic determination of engineering rules, properties, and logical constraints, enhancing the accuracy of extracted data without requiring pre-configured rule sets.

By using LLM-assisted intervention, the proposed method significantly reduces manual effort and cost. Traditional extraction techniques often require extensive human review to correct misinterpretations and ambiguities. The proposed approach minimizes these corrections, leading to increased efficiency in engineering document processing, reduced engineering workload, and overall cost savings for organizations that rely on large-scale engineering documentation.

Additionally, the system is adaptive and scalable across various industries, including oil and gas, chemical processing, power plants, and manufacturing. Unlike conventional methods that may struggle with new tagging conventions or industry-specific variations, the proposed approach dynamically adapts to new formats without requiring retraining. This makes it a future-proof solution for engineering data extraction, interpretation, and standardization.

The present invention includes an automated and a learned approach, that not only extracts data, however, also enriches the data with contextual and semantic information. The semantic enrichment process can address several key disambiguation scenarios, including but not limited to textual disambiguation, where it determines whether a given text represents an instrument, equipment, or a pipe tag. Tag decomposition is another aspect, which involves breaking down a resolved tag into its constituent fragments to ensure accurate classification. Equipment identification plays a crucial role in differentiating between similar equipment types, such as distinguishing a boiler with or without an agitator.

Additionally, contextual expectation validation ensures the presence of expected surrounding entities, for instance, confirming the required presence of associated instruments. Line classification helps differentiate between various types of connections, such as discerning whether a dotted line represents a pipe or a signal, while piping line verification establishes whether a thick line represents a primary piping line.

Further, symbol relationship validation ensures the existence of necessary intermediate components, such as verifying the presence of a valve between a pump and a boiler. Logical consistency evaluation helps verify whether an extracted motor should indeed be classified as a pump. Metadata utilization constrains attributes based on contextual parameters, such as ensuring compatibility of equipment with environmental conditions, for example, ensuring that a tropical pump is not used in a Siberian plant.

Furthermore, attribute enrichment augments missing attributes for entities based on operational context, such as differentiating between field-installed and remotely installed instruments. Association clarification ensures the correct association between extracted text and corresponding symbols.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Reference numerals:

- 100: Network Architecture
- 102: Computing system
- 104: Assets
- 106: Communication network
- 108: Electronic devices
- 110: Database
- 112: Hardware Processor(s)
- 114: Memory
- 116: Plurality of modules
- 118: Computing/Computer-simulated environment
- 120: Technical installation
- 202: Processor(s)
- 204: Memory
- 206: Communication interface
- 208: Network interface
- 210: Input/output unit
- 212: Bus
- 214: Enriched engineering diagram generating module
- 302: Data receiving module
- 304: Schematic element determining module
- 306: Semantic relationship identifying module
- 308: Prompt generating module
- 310: Response generating module
- 312: Engineering diagram enriching module
- 314: Enriched engineering diagram outputting module
- 500: Tank
- 600: Pipeline

## Claims

1. A method for generating domain-knowledge enriched engineering diagrams corresponding to assets (104) in a technical installation (120), the method comprising:
receiving, by a processor (112), from one or more data sources, one or more engineering diagrams corresponding to one or more assets (104) installed in one or more technical installations (120), wherein the one or more data sources and the one or more engineering diagrams comprise at least one of a structured data and an unstructured data;
determining, by the processor (112), one or more schematic elements in the received one or more engineering diagrams comprising one or more topologies of the one or more assets (104) installed in the one or more technical installations (120), using one or more visual recognition techniques, wherein the one or more schematic elements comprise at least one of a schematic attribute, a schematic feature, and a schematic entity;
identifying, by the processor (112), at least one of one or more correlations, one or more associations, one or more classifications, and one or more patterns in the determined one or more schematic elements, based on one or more contextual features of the one or more schematic elements;
generating, by the processor (112), one or more structured large language model (LLM) prompts corresponding to the identified at least one of one or more correlations, one or more associations, one or more classifications, and one or more patterns;
generating, by the processor (112), an LLM response to the generated one or more structured LLM prompts, wherein the LLM response comprises a validation result corresponding to at least one of the one or more correlations, the one or more associations, the one or more classifications, and the one or more patterns in the one or more schematic elements, wherein the generated LLM response is based on a confidence score;
enriching, by the processor (112), the one or more schematic elements in the one or more engineering diagrams using one or more LLM models, based on the validation result, by mapping engineering data from a domain-specific knowledge base corresponding to a technical domain associated with the one or more engineering diagrams; and
outputting, by the processor (112), via a display associated with an electronic device (108), the enriched one or more engineering diagrams corresponding to the one or more assets (104) installed in the one or more technical installations (120).

2. The method as claimed in claim 1, wherein enriching the one or more schematic elements further comprises:
resolving, by the processor (112), at least one of one or more ambiguities and one or more anomalies for each of the one or more schematic elements, using the one or more LLM models, by mapping the engineering data from the domain-specific knowledge base corresponding to the technical domain associated with the one or more engineering diagrams, based on the validation result.

3. The method as claimed in claim 1, wherein enriching the one or more schematic elements further comprises:
augmenting, by the processor (112), at least one of the schematic attribute, the schematic feature, and the schematic entity derived from the LLM response to the one or more schematic elements, based on at least one of one or more semantic rules, one or more domain-specific ontologies, one or more hierarchical relationship taxonomies, and the validation result, upon resolving at least one of the one or more ambiguities and the one or more anomalies.

4. The method as claimed in claim 1, wherein the method for identifying at least one of the one or more correlations, the one or more associations, the one or more classifications, and the one or more patterns in the determined one or more schematic elements comprises:
correlating, by the processor (112), the extracted one or more schematic elements with at least one of the schematic attribute, the schematic feature, and the schematic entity;
generating, by the processor (112), a first semantic relationship for the correlated one or more schematic elements; and
generating, by the processor (112), the one or more structured LLM prompts corresponding to the generated first semantic relationship.

5. The method as claimed in claim 1, wherein the method for generating the one or more structured LLM prompts, comprises:
generating, by the processor (112), a disambiguation.resolving prompt from the one or more structured LLM prompts for disambiguating a symbol classification in the determined one or more schematic elements, wherein the one or more LLM models extract the engineering data from the domain-specific knowledge base, for resolving one or more ambiguities in the symbol classification based on analysing the one or more contextual features of the one or more schematic elements;
generating, by the processor (112), an association validating prompt from the one or more structured LLM prompts for validating the one or more associations between text and symbols in the determined one or more schematic elements, wherein the one or more LLM models analyse one or more relational constraints, one or more contextual dependencies, and one or more engineering semantic diagrams for determining consistency and correctness in mapping the text and the symbols;
generating, by the processor (112), a domain-based refining prompt for a technical domain-based completion and correction of the one or more schematic elements, wherein the one or more LLM models map pre-defined engineering heuristics, syntactic and semantic constraints, and rule-based inferences to refine and enrich the one or more engineering diagrams; and
generating, by the processor (112), a pattern decomposing prompt for decomposing the one or more patterns in the one or more schematic elements, wherein the one or more LLM models extract structured representations, identify recurring relationships, and optimize engineering processes based on at least one of a historical data, a predefined constraints, a user-specified parameters; and
wherein the one or more LLM prompts are dynamically optimized and prioritized based on at least one of one or more historical interactions with the one or more LLM models, one or more predefined rules, one or more technical domains, one or more modalities, the one or more ambiguities, and the one or more anomalies.

6. The method as claimed in claim 1, wherein the validation result in the LLM response comprises:
cross-referencing, by the processor (112), the one or more schematic elements in the one or more engineering diagrams with one or more domain-specific rules stored in the domain-specific knowledge base, using the one or more LLM models;
applying, by the processor (112), one or more engineering principles and downstream use in engineering workflows for the cross-referenced one or more schematic elements;
validating, by the processor (112), a correctness of one or more inferred semantic relationships, based on applying the one or more engineering principles and the downstream use in the engineering workflows; and
outputting, by the processor (112), via the display, the validated correctness of the one or more inferred semantic relationships of the one or more schematics elements.

7. The method as claimed in claim 1, wherein the method of generating the LLM response to the one or more structured LLM prompts, comprises:
identifying, by the processor (112), a set of semantic elements within an operating context of the one or more assets (104) in the one or more engineering diagrams;
analysing, by the processor (112), one or more feasible combinations of the identified set of semantic elements, based on a pre-defined constraints and operational parameters within the operating context of the one or more engineering diagrams;
decomposing, by the processor (112), the set of schematic elements into one or more functional units based on the operating context of the one or more assets (104);
evaluating, by the processor (112), a feasibility of each of a combination of the decomposed set of schematic elements to validate a compatibility parameter and an optimization parameter within the operating context; and
outputting, by the processor (112), one or more combinations of the set of schematic elements with optimal feasibility within the operating context.

8. The method as claimed in claim 1, further comprising:
determining, by the processor (112), the confidence score for each of at least one of one or more correlations, one or more associations, one or more classifications, and one or more patterns in the determined one or more schematic elements, based on the generated structured LLM prompt; and
resolving, by the processor (112), at least one of one or more ambiguities and one or more anomalies for each of the one or more schematic elements, using at least one of the pre-trained LLM models and the fine-tuned LLM models, based on the validation result and the determined confidence score.

9. The method as claimed in claim 1, further comprising:
updating iteratively, by the processor (112), the one or more schematic elements in the one or more engineering diagrams, based on resolving at least one of one or more ambiguities and one or more anomalies, and an engineering data from a knowledge base.

10. The method as claimed in claim 1, further comprising:
identifying, by the processor (112), the one or more schematic elements comprising one or more engineering annotations in the one or more engineering diagrams;
determining, by the processor (112), a contextual relevance of the identified one or more engineering annotations by associating the one or more engineering annotations with one or more components in spatial proximity to the one or more engineering annotations, and a pre-defined engineering rules;
segmenting, by the processor (112), the one or more engineering annotations into a plurality of segmented annotations, using at least one of the pre-trained LLM models and the fine-tuned LLM models;
predicting, by the processor (112), the one or more schematic elements comprising one or more first tags, to resolve ambiguities in the plurality of segmented annotations, by analysing a pre-defined engineering standards and referencing contextual schematic elements within the one or more engineering diagrams; and
assigning, by the processor (112), one or more second tags to the one or more engineering annotations in the one or more engineering diagrams, based on the prediction.

11. The method as claimed in claim 1, wherein the one or more engineering diagrams comprise at least one of, drawings, schematics, figures, piping, and instrumentation diagrams (P&IDs), floor plans, interconnections, electrical connections, blueprints, engineering annotations, and heating, ventilation, and air conditioning (HVAC) diagrams.

12. The method as claimed in claim 1, wherein the one or more contextual features comprises at least one of a temporal information, a spatial information, a semantic information relevant to usage of each of the one or more schematic elements.

13. The method as claimed in claim 7, wherein decomposing the set of schematic elements into one or more functional units comprising, segregating at least one of one or more text patterns, labels, symbols, annotations, functional components, connections, and graphical elements, based on functionalities and interconnections of each of the functional components, instruments, pipelines, nozzles in the one or more assets (104).

14. A computing system (102) comprising:
one or more processor(s) (112); and
a memory (114) coupled to the one or more processor (s) (112), wherein the memory (114) comprises an enriched engineering diagram generating module (214) stored in a form of machine-readable instructions executable by the one or more processor(s) (112), wherein the enriched engineering diagram generating module (214) is capable of performing a method according to any of the claims 1-13.

15. A computing environment (118) comprising:
one or more user devices (108);
one or more technical installations (120) comprising one or more assets (104); and
a computing system (102) communicatively coupled to the one or more technical installations (120) and the one or more user devices (108) via a network (106), wherein the computing system (102) comprises an enriched engineering diagram generating module (214) capable of performing a method according to any of the claims 1-13.

16. A computer program product comprising machine-readable instructions stored therein that, when executed by one or more processor(s) (112), cause the one or more processor(s) (112) to perform a method according to any of the claims 1-13.
